# EUROPEAN PATENT APPLICATION

(11) **EP 4 765 568 A1**
(43) Date of publication of application: **24.06.2026**
(21) Application number: 25209306.7
(22) Date of filing: 17.10.2025
(51) Int. Cl.: H02J 7/34, H02J 7/40, H02J 7/70

(54) **CHARGER**

(30) Priority: 23.12.2024 CN 202411906906; 29.08.2025 CN 202521867116 U; 29.08.2025 CN 202511234462; 29.08.2025 CN 202511234471
(71) Applicant: Nanjing Chervon Industry Co., Ltd., Nanjing, Jiangsu 211106 (CN)
(72) Inventor: LI, Ju, Nanjing (CN); WANG, Wenbin, Nanjing (CN); HAO, Jingdong, Nanjing (CN); YUAN, Yuan, Nanjing (CN); LI, Guanzhou, Nanjing (CN); XIE, Jinxin, Nanjing (CN)
(74) Representative: Sun, Yiming

(57) **Abstract**

A charger includes: a housing; a charging interface configured to be electrically connected to a first battery pack; a direct current power interface configured to be electrically connected to a second battery pack; and a drive assembly accommodated in the housing and configured to supply power to the charging interface. The drive assembly is electrically connected to the charging interface and the direct current power interface and is configured to transfer electric energy from the second battery pack to the first battery pack, the maximum output power of the drive assembly is greater than or equal to 2000 W, and the first battery pack and the second battery pack are detachably connected to the charger, so as to be detached and then mounted to a power tool and supply power to the power tool.

## Description

### TECHNICAL FIELD

The present application relates to the technical field of power tools, for example, a charger.

### BACKGROUND

Various power tools such as electric circular saws, chainsaws, pruners, nail guns, and mowers are widely used in various scenarios such as industry and home. With the benefit of the development of related technologies, at present, the entire power tool industry presents a development trend of lithium electrification and intelligence. Most of the preceding power tools are powered by battery packs, and the related design needs to consider the requirements of tools and batteries, where one problem lies in how to ensure endurance when the power tools are used for continuous operation, which involves the charging problem of the preceding battery packs.

This part provides background information related to the present application, and the background information is not necessarily the existing art.

### SUMMARY

The present application aims to solve or at least alleviate part or all of the preceding problems. Therefore, the present application provides a charger.

A charger includes: a housing; a charging interface configured to be electrically connected to a first battery pack; a direct current (DC) power interface configured to be electrically connected to a second battery pack; and a drive assembly accommodated in the housing and configured to supply power to the charging interface. The drive assembly is electrically connected to the charging interface and the direct current power interface and is configured to transfer electric energy from the second battery pack to the first battery pack, the maximum output power of the drive assembly is greater than or equal to 2000 W, and the first battery pack and the second battery pack are detachably connected to the charger, so as to be detached and then mounted to a power tool and supply power to the power tool.

In some examples, the first battery pack supplies power to a handheld power tool, and the second battery pack supplies power to a wheeled power tool.

In some examples, the total capacity of the first battery pack is less than or equal to 1 kWh, and the total capacity of the second battery pack is greater than or equal to 2 kWh.

In some examples, the rated voltage of the first battery pack is substantially the same as the rated voltage of the second battery pack.

In some examples, electrochemical properties of cells in the first battery pack are different from electrochemical properties of cells in the second battery pack.

In some examples, the charger further includes an alternating current (AC) power interface, where the alternating current power interface is configured to charge the first battery pack and the second battery pack.

In some examples, the charger further includes an alternating current-direct current converter, where the alternating current power interface charges the second battery pack through the alternating current-direct current converter.

A charger includes: a housing; a charging interface configured to be electrically connected to a first battery pack; a direct current power interface configured to be electrically connected to a second battery pack; and a drive assembly accommodated in the housing and configured to supply power to the charging interface. The drive assembly includes a drive box and at least one power module accommodated in the drive box, the at least one power module is electrically connected to the charging interface and the direct current power interface and is configured to transfer electric energy from the second battery pack to the first battery pack, and the ratio of the maximum output power of the drive assembly to the volume of the drive box is greater than or equal to 0.7 W/cm³.

In some examples, the drive box is substantially in the shape of a rectangular cuboid, and the volume of the drive box is less than or equal to 3500 cm³.

In some examples, the at least one power module includes a four-switch buck-boost (FSBB) circuit, and switch transistors connected in parallel are used in the FSBB circuit.

In some examples, the switching frequency of a switch transistor in the FSBB circuit is greater than or equal to 180 kHz.

In some examples, the at least one power module further includes a drive booster circuit configured to send a strengthened drive signal to the FSBB circuit.

In some examples, the drive booster circuit includes at least one of a driver chip, a push-pull circuit, a totem pole circuit, and a level shifter circuit.

In some examples, each of the at least one power module includes an energy storage element, and the height of the energy storage element is less than or equal to 25 mm.

In some examples, each of the at least one power module includes an aluminum substrate, and the thickness of the aluminum substrate is greater than or equal to 3 mm.

In some examples, the drive assembly further includes a fan accommodated in the drive box, and the volume of the fan is less than or equal to 100 cm³.

In some examples, at least two power modules are capable of being connected in parallel and supplying power to the same charging interface.

A charger includes: a housing; a charging interface disposed on the housing and configured to be electrically connected to a first battery pack; a direct current power interface disposed on the housing and configured to be electrically connected to a second battery pack; and a drive assembly accommodated in the housing, where the drive assembly is electrically connected to the charging interface and the direct current power interface and is configured to transfer electric energy from the second battery pack to the first battery pack. The housing is the same as the housing of a second charger which has been on sale before December 31, 2024, and the maximum output power of the charger is at least 1.5 times the maximum output power of the second charger.

In some examples, the second charger includes a second interface corresponding to the charging interface, and the maximum output power of the charging interface of the charger is at least 3 times the maximum output power of the second interface of the second charger.

In some examples, the drive assembly includes a drive box substantially in the shape of a rectangular cuboid, and the drive box is located below the charging interface and/or the direct current power interface.

In some examples, the height of the drive box is greater than or equal to 8 cm and less than or equal to 15 cm.

In some examples, the drive assembly further includes at least two power modules that can be connected in parallel, and the power modules are accommodated inside the drive box.

In some examples, the volumetric power density of the drive assembly is greater than or equal to 0.7 W/ cm³.

In some examples, the drive assembly further includes a heat sink, the heat sink is disposed at a side surface of the drive box, and the thickness of the heat sink of the charger is at least 2 times the thickness of a second heat sink of the second charger.

In some examples, an aluminum substrate is disposed at the bottom of the drive box, and the aluminum substrate can support the drive assembly and has a thickness of greater than or equal to 3 mm.

A charger includes: a first charging interface and a second charging interface, where each of the first charging interface and the second charging interface is configured to be electrically connected to one battery pack; a drive assembly including multiple power modules connected in parallel and configured to supply power to the first charging interface and the second charging interface; and a controller configured to control output power of the drive assembly. The first charging interface is electrically connected to the drive assembly through a first electronic switch, and the second charging interface is electrically connected to the drive assembly through a second electronic switch. The controller is configured to: acquire voltages of battery packs to which the first charging interface and the second charging interface are electrically connected, respectively; and turn off the first electronic switch in the case where a voltage of a battery pack connected to the first charging interface is higher than a voltage of a battery pack connected to the second charging interface and the voltage difference between the two exceeds a preset voltage difference threshold.

In some examples, the controller is configured to control the output power of the drive assembly based on the maximum charging current allowed by the battery pack connected to the second charging interface.

In some examples, in the case where the voltage difference between the battery pack connected to the first charging interface and the battery pack connected to the second charging interface does not exceed the preset voltage difference threshold, the first charging interface and the second charging interface adaptively allocate the output power of the drive assembly.

In some examples, each power module includes a direct current-direct current converter, and switch transistors connected in parallel are used in the direct current-direct current converter.

In some examples, the charger further includes a power interface configured to supply a current to the drive assembly.

In some examples, the power interface is an alternating current power interface, and the charger further includes an alternating current-direct current converter.

In some examples, in the case where the alternating current power interface supplies a current to the drive assembly, the maximum output power of the charger is greater than or equal to 2000 W.

In some examples, the power interface is a direct current power interface, the direct current power interface is configured to be electrically connected to a second battery pack different from the battery pack, and/or the direct current power interface is configured to be electrically connected to another charger.

In some examples, the power interface includes the alternating current power interface and the direct current power interface, and a preset voltage difference threshold adopted by the controller in the case where the alternating current power interface supplies the current to the drive assembly is higher than a preset voltage difference threshold adopted by the controller in the case where the direct current power interface supplies the current to the drive assembly.

In some examples, the power interface includes the alternating current power interface and the direct current power interface, and the maximum output power of the charger in the case where the alternating current power interface supplies the current to the drive assembly is greater than or equal to the maximum output power of the charger in the case where the direct current power interface supplies the current to the drive assembly.

A charger includes: multiple charging interfaces, where each of the multiple charging interfaces is configured to be electrically connected to one battery pack; a drive assembly including multiple power modules connected in parallel, where the multiple power modules are configured to supply power to the multiple charging interfaces; and a controller configured to control the output power of the drive assembly. Each charging interface is electrically connected to the drive assembly through an electronic switch separately. The controller is configured to: acquire the battery pack connection status of each of the multiple charging interfaces; control, based on the battery pack connection status, the electronic switch to be on or off, so as to enter a single-interface charging mode or a multi-interface charging mode; and control the maximum output power of the drive assembly in the single-interface charging mode based on the maximum charging current allowed by the battery pack connected to the charging interface which is turned on through the electronic switch.

In some examples, the controller is configured to: control, in the single-interface charging mode, the drive assembly to provide a charging rate of greater than or equal to 5 C for the charging interface when the charging interface is electrically connected to a tabless battery pack; and control, in the single-interface charging mode, the drive assembly to provide a charging rate of less than or equal to 2 C for the charging interface when the charging interface is electrically connected to a tabbed battery pack.

In some examples, the controller is configured to turn, in the case where the voltage difference between battery packs connected to the multiple charging interfaces is greater than a preset voltage difference threshold, off the electronic switch corresponding to the charging interface where a battery pack on a high-voltage side is located, so as to enter the single-interface charging mode.

In some examples, in the case where the voltage difference between the battery packs connected to the multiple charging interfaces is less than or equal to the preset voltage difference threshold, the multi-interface charging mode is entered.

In some examples, in the multi-interface charging mode, the multiple charging interfaces adaptively allocate the output power of the drive assembly.

A charger includes: multiple charging interfaces, where each of the multiple charging interfaces is configured to be electrically connected to one battery pack; a drive assembly configured to supply power to the multiple charging interfaces; and a controller electrically connected to the drive assembly and the multiple charging interfaces. The controller is configured to confirm the battery pack connection status of each of the multiple charging interfaces and control, based on the battery pack connection status, the maximum output power allocated by the drive assembly to each charging interface.

In some examples, the battery pack connection status of the charging interface includes information on whether the charging interface is electrically connected to the battery pack.

In some examples, the drive assembly includes multiple power modules, the number of the power modules is greater than or equal to the number of the charging interfaces, and the controller is configured to evenly allocate the multiple power modules to charging interfaces electrically connected to battery packs, so as to supply power to the charging interfaces.

In some examples, the battery pack connection status of the charging interface further includes information on the battery pack electrically connected to the charging interface, and the information on the battery pack includes at least one of the temperature, voltage, a state of charge (SOC), and model of the battery pack.

In some examples, the controller is further configured to control, based on information on the battery packs electrically connected to the multiple charging interfaces, the maximum output power allocated by the drive assembly to the charging interfaces.

In some examples, the charger further includes a housing, the multiple charging interfaces are disposed on the housing, and the drive assembly and the controller are disposed inside the housing.

In some examples, the drive assembly includes a drive box and the multiple power modules accommodated in the drive box, where each of the power modules includes a direct current-direct current converter.

In some examples, the charger further includes a power interface configured to supply a current to the drive assembly.

In some examples, the power interface is an alternating current power interface, and the charger further includes an alternating current-direct current converter.

In some examples, the power interface is a direct current power interface.

In some examples, the direct current power interface is configured to be electrically connected to a second battery pack different from the battery pack, and/or the direct current power interface is configured to be electrically connected to another charger.

In some examples, the direct current power interface is further configured to be electrically connected to a photovoltaic module, and the photovoltaic module is configured to perform photoelectric conversion to supply a current to the direct current power interface.

A charger includes: multiple charging interfaces, where each of the multiple charging interfaces is configured to be electrically connected to one battery pack; multiple power modules, where each of the multiple power modules is configured to supply power to one of the multiple charging interfaces separately, and the number of the power modules is at least equal to the number of the charging interfaces; and a controller electrically connected to the multiple power modules and the multiple charging interfaces. The controller is configured to confirm the battery pack connection status of each of the multiple charging interfaces and adjust the connection relationships between the multiple power modules and the multiple charging interfaces based on the battery pack connection status.

In some examples, the controller is configured not to allocate a power module to a charging interface in the case where no battery pack is connected to the charging interface.

In some examples, the controller is configured to evenly allocate the multiple power modules to charging interfaces electrically connected to battery packs, so as to supply power to the charging interfaces.

In some examples, each of the power modules includes a direct current-direct current converter, and the switching frequency of a switch transistor in the direct current-direct current converter is greater than or equal to 180 kHz.

A charger includes: a first charging interface and a second charging interface, where each of the first charging interface and the second charging interface is configured to be electrically connected to one battery pack; a drive assembly configured to supply power to the first charging interface and the second charging interface; and a controller electrically connected to the drive assembly, the first charging interface, and the second charging interface. The controller is configured to: control, in the case where both the first charging interface and the second charging interface are electrically connected to battery packs, the drive assembly to operate in a first charging mode; control, in the case where only one of the first charging interface and the second charging interface is electrically connected to a battery pack, the drive assembly to operate in a second charging mode. The maximum output power of the first charging interface or the second charging interface in the second charging mode is greater than the maximum output power of each of the first charging interface and the second charging interface in the first charging mode.

In some examples, the drive assembly includes a first power module and a second power module, and in the first charging mode, the first power module supplies power to the first charging interface, and the second power module supplies power to the second charging interface.

In some examples, the drive assembly includes the first power module and the second power module, and in the second charging mode, the first power module and the second power module collectively supply power to the first charging interface or the second charging interface.

In some examples, in the second charging mode, the maximum output power of the first charging interface or the maximum output power of the second charging interface is greater than or equal to 2000 W.

A charging system includes a charger and a wireless communication module. The charger includes: a housing; a charging interface configured to be detachably connected to a battery pack; an alternating current power interface configured to acquire mains electricity; a direct current power interface configured to acquire a direct current; a drive assembly accommodated in the housing, where the drive assembly is configured to use a current acquired from the alternating current power interface or the direct current power interface to charge the battery pack connected to the charging interface; a controller accommodated in the housing, where the controller is configured to acquire information on the battery pack connected to the charging interface; and a wireless communication module interface disposed on the housing and detachably connected to the wireless communication module. The wireless communication module includes: a module housing; a host interface that is disposed on the module housing and can be coupled to the wireless communication module interface; a cellular network unit accommodated in the module housing and configured to be connected to an Internet server; and a built-in battery accommodated in the module housing and configured to supply power to the cellular network unit. The drive assembly is also configured to use, in the case where the host interface is coupled to the wireless communication module interface, the current acquired from the alternating current power interface or the direct current power interface to charge the built-in battery.

In some examples, the drive assembly is configured to preferentially use a current acquired from the alternating current power interface to charge the built-in battery.

In some examples, each of the charger and the wireless communication module further includes a Bluetooth unit, and the controller is configured to establish a wireless communication connection with the wireless communication module through the Bluetooth unit.

In some examples, the charger and the wireless communication module perform, through the wireless communication connection, interaction on the information on the battery pack connected to the charging interface.

In some examples, the information on the battery pack includes one or more of the current, voltage, and electric quantity of a current charging process of the battery pack.

In some examples, the wireless communication module interface is a universal serial bus (USB) interface.

In some examples, the wireless communication interface is disposed on a side surface of the housing.

In some examples, the wireless communication interface is provided with a detachably connected protective plug.

In some examples, the direct current power interface acquires a direct current from a second battery pack detachably connected to the charger, and the total capacity of the second battery pack is greater than or equal to 2 kWh.

A charging system includes a charger and a wireless communication module. The charger includes: a housing; a charging interface configured to be detachably connected to a battery pack; a drive assembly accommodated in the housing, where the drive assembly is configured to charge the battery pack connected to the charging interface; a controller accommodated in the housing, where the controller is configured to acquire information on the battery pack connected to the charging interface; a Bluetooth unit accommodated in the housing and configured to be communicatively connected to the controller; and a wireless communication module interface disposed on the housing and detachably connected to the wireless communication module. The wireless communication module includes: a module housing; a host interface that is disposed on the module housing and can be coupled to the wireless communication module interface; a Bluetooth unit accommodated in the module housing; and a cellular network unit accommodated in the module housing and configured to be connected to an Internet server. In the case where the host interface is coupled to the wireless communication module interface, the wireless communication module and the controller establish a wired communication connection at least through the wireless communication interface. In the case where the host interface is not coupled to the wireless communication module interface, the controller establishes a wireless communication connection with the wireless communication module through the Bluetooth unit.

### BRIEF DESCRIPTION OF DRAWINGS

FIG. 1 is a schematic view of a feeding system constituted by power tools, a battery pack, and a charger cooperating with each other in the present application.
FIG. 2 is a schematic view showing the scenario where a power interface of a charger in the present application receives direct current electric energy or alternating current electric energy and a battery pack is charged through a charging interface.
FIG. 3 is a perspective view of a charger as an example of the present application.
FIG. 4 is a perspective view of internal structures of the charger shown in FIG. 3 with a housing removed.
FIG. 5 is a perspective view of internal structures of the charger shown in FIG. 4 with a housing removed from another viewing angle.
FIG. 6 is a perspective view of internal structures of a drive assembly within a housing of the charger shown in FIG. 4, where a drive box is removed from the drive assembly.
FIG. 7 is a perspective view showing an aluminum substrate, a heat sink, a power module, and the like within the drive box of the charger shown in FIG. 6.
FIG. 8 is a perspective view of a drive box of a charger as an example of the present application.
FIG. 9A is a side view of the drive box shown in FIG. 8.
FIG. 9B is a top view of the drive box shown in FIG. 8.
FIG. 10 is an exploded view showing internal structures of the drive box shown in FIG. 8.
FIG. 11 is a schematic diagram of electric control of a charger as an example of the present application.
FIG. 12A is a schematic diagram of electric control showing that a controller as an example of the present application controls a drive assembly to adjust the maximum output power allocated to charging interfaces and the battery packs at the charging interfaces.
FIG. 12B is a schematic diagram of electric control showing that a controller as another example of the present application controls a drive assembly to adjust the maximum output power allocated to charging interfaces and the battery packs at the charging interfaces.
FIG. 13A is a schematic diagram of electric control of a charger as an example of the present application in a second charging mode.
FIG. 13B is a schematic diagram of electric control of a charger as an example of the present application in a first charging mode.
FIG. 14 is a schematic diagram of electric control of a charger as an example of the present application in a single-interface charging mode or a multi-interface charging mode.
FIG. 15 is a schematic diagram of electric control of a charging system including a charger and a wireless communication module as an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions proposed in the present application are further described below in detail in conjunction with drawings and examples.

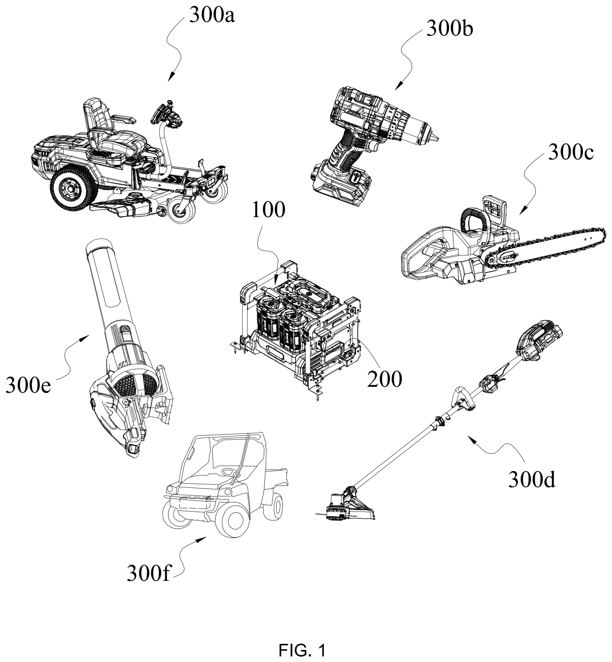

Referring to FIG. 1, FIG. 1 is a schematic view showing that a battery pack 200 supplies power to power tools 300. The power tools 300 in the present application include power tools 300 of different categories and power tools 300 of the same category but different models. The power tools 300 to which the battery pack 200 supplies power include, but are not limited to, a riding mower 300a, an electric drill 300b, a chainsaw 300c, a string trimmer 300d, a blower 300e, and an all-terrain vehicle 300f shown in FIG. 1. In some examples, the power tools 300 fed by the battery pack 200 may include handheld power tools such as a pruner, a nail gun, and a reciprocating saw. In some examples, the power tools 300 fed by the battery pack 200 may include table tools, for example, a table saw, a miter saw, and a metal cutter. In some examples, the power tools 300 fed by the battery pack 200 may include wheeled power tools. The wheeled power tools may include push tools such as a push mower and a push snow thrower, may include riding tools such as a riding mower and a stand-on mower, and may include outdoor electric vehicles such as a farmer's vehicle and a golf cart. Furthermore, other power tools provided with traveling assemblies such as traveling wheels may also be included. In some examples, the power tools 300 fed by the battery pack 200 may include robotic tools such as a robotic mower and a robotic snow thrower. Alternatively, in some examples, the preceding power tools 300 may be garden tools, including a pruner, a blower, a mower, and a string trimmer. In some examples, the preceding power tools 300 may be decorating tools, including a screwdriver, a nail gun, a glue gun, a sander, and an electric circular saw. In some examples, the preceding power tools 300 may be cutting tools, including a reciprocating saw, a jigsaw, an electric circular saw, and a chainsaw. In some examples, the preceding power tools 300 may be fastening tools, including an electric drill, a screwdriver, and an electric hammer. In some examples, the preceding power tools 300 may be sanding tools, including an angle grinder and a sander. In some examples, the preceding power tools 300 may be other tools such as an electric lamp, a fan, and a vacuum cleaner. It is to be understood that on the premise that the characteristics are not contradictory, more types of power tools 300 that are fed by the battery pack 200 and have not been shown above may exist.

Different power tools 300 may have different basic structural compositions. For example, the riding mower may include a traveling assembly constituted by traveling wheels and a traveling motor and a cutting assembly constituted by a blade and a cutting motor. The chainsaw may include a guide plate, a chain supported on the periphery of the guide plate, and a motor driving the chain to rotate and cut around the guide plate. In addition, the preceding power tools 300 to which the battery pack 200 supplies power generally have battery connection portions for mounting the battery pack 200, and the specific structures and position arrangement of the battery connection portions in different power tools 300 may be different.

The battery pack 200 includes a battery housing and one or more cell modules accommodated in the battery housing. Each cell module includes several cells. In some examples, cells in the battery pack for a power tool are lithium-ion cells. In some examples, the cells in the battery pack for the power tool are tabbed cells or tabless cells. The battery pack 200 is generally further provided with a battery management device. The battery management device includes a controller capable of performing charging and discharging monitoring and management from a battery end. The battery pack 200 may include various types of sensors and other detection elements for detecting a temperature and a current, and the details are not repeated here. The battery pack 200 in the present application may include different types of battery packs 200. The type difference of the battery pack 200 may be embodied in electrical characteristics such as the total capacity and rated voltage of the battery pack 200 or may be embodied in mechanical characteristics such as the interface structure and appearance size of the battery pack 200. Furthermore, the type difference of the battery pack 200 may involve differences in electrical and mechanical characteristics of the cells.

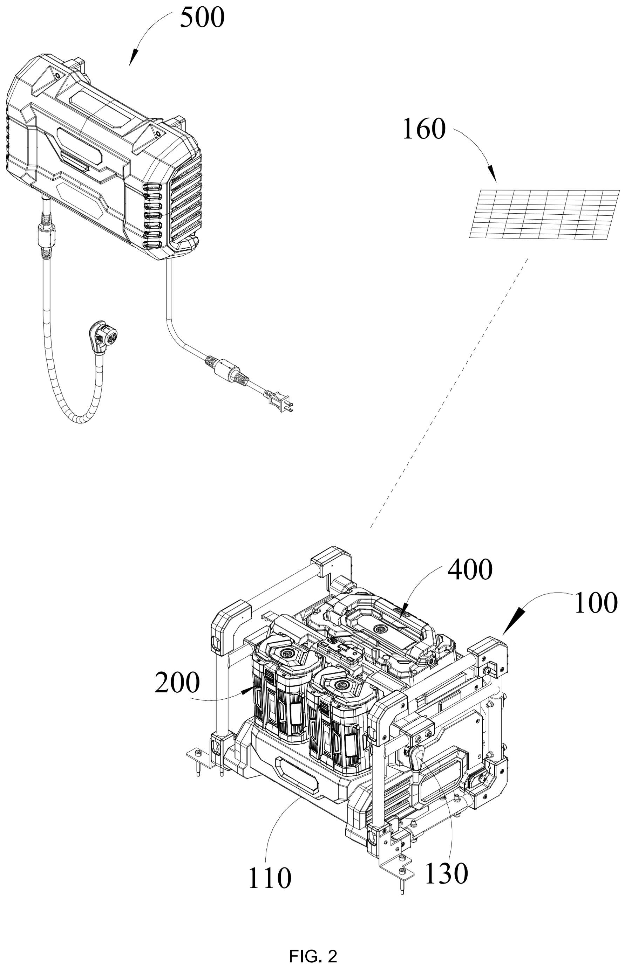

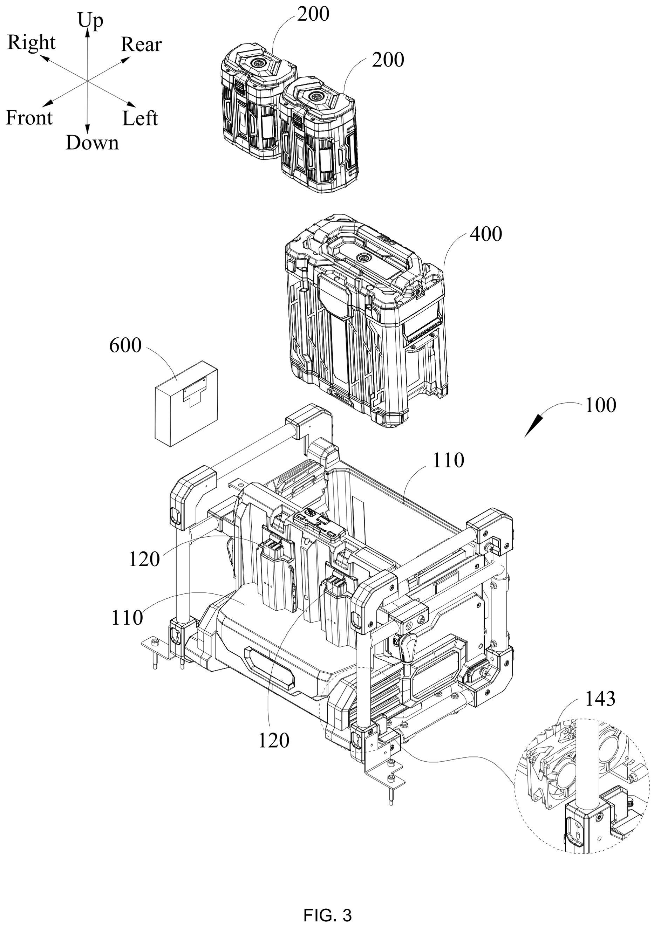

Referring to FIGS. 2 to 7, a charger 100 which may be used as an example of the present application is shown. The preceding battery pack 200 for the power tools may be charged through the charger 100. In addition, six directions of the charger in the present application such as up, down, front, rear, left, and right are defined in FIG. 3. As shown in FIGS. 2 to 7, the charger 100 includes a housing 110, interfaces 120 and 130 disposed on the housing 110, and a drive assembly 140 and a controller 150 that are accommodated in the housing 110. The housing 110 forms an appearance body of the charger 100, and an accommodation space is formed inside the housing 110. The housing 110 can support, fix, and accommodate other parts and components of the charger 100. The interfaces 120 and 130 are disposed on the housing 110 to be coupled to a battery pack and/or an external power supply so that the charger 100 performs electric energy transfer and information interaction on the battery pack and/or the external power supply coupled to the interfaces 120 and 130. Exemplarily, the interfaces 120 and 130 penetrate through the housing 110, are partially located outside the housing 110 to be connected to the battery pack and/or the external power supply, and are partially located inside the housing 110 to be connected to the drive assembly 140, the controller 150, and the like described later. The interfaces 120 and 130 are generally disposed on a side surface of the housing 110 other than the bottom surface, and electrical and mechanical characteristics of the interfaces 120 and 130 are adaptable to interface characteristics of the battery pack 200 to be charged and the like. The drive assembly 140 is disposed in the accommodation space inside the housing 110 and is electrically connected to the preceding interfaces 120 and 130 to transfer electric energy between battery packs and between the external power supply and the battery pack. The controller 150 is also disposed in the accommodation space inside the housing 110 and is electrically connected to the drive assembly 140 and the interfaces 120 and 130 mentioned above to perform global management and control on electric energy transfer and information interaction between the interfaces 120 and 130. For example, data signals of the battery pack and/or the external power supply are received, processed, transmitted between the interfaces 120 and 130, and the electric energy transfer performed by the drive assembly 140 is controlled. In some examples, one or more of a microcontroller unit (MCU), an advanced reduced instruction set computer machine (ARM), and a digital signal processor (DSP) may be used as the controller 150.

Exemplarily, the charger 100 has at least two types of interfaces: a charging interface 120 and a power interface 130. The charging interface 120 is connected to the battery pack 200, and the charger 100 can transfer electric energy to the battery pack 200 through the charging interface 120. The power interface 130 is connected to the external power supply, and the charger 100 can obtain electric energy from the external power supply through the power interface 130. The external power supply may be mains electricity from (a power grid), a battery pack, a photovoltaic module, or the like. Information interaction between the charger 100 and the battery pack 200 and information interaction between the charger 100 and the external power supply may be performed in a wired manner through the preceding interfaces 120 and 130 or may be performed in a wireless manner without using the preceding interfaces 120 and 130. The number and position of the preceding charging interface 120 and the preceding power interface 130 are not limited.

In some examples, in terms of the appearance, the charging interface 120 of the charger 100 may be in the form of a terminal block. The charging interface 120 may include a positive terminal and a negative terminal for the electric energy transfer and may also include a communication terminal for the information interaction. In the housing 110, the terminals of the terminal block may be connected to the drive assembly 140, the controller 150, and the like through cables. In some other examples, the charging interface 120 may be in another form, including but not limited to a fast charging interface or a USB interface. In some examples, the charger 100 has at least two charging interfaces 120. Furthermore, according to different types of mounted battery packs 200, the charging interfaces 120 may also be divided into different types. For example, a charging interface where a second battery pack 400 described later that can discharge electricity to charge another battery pack 200 is located is different from a charging interface where a first battery pack 200 that only performs charging is located.

As shown in FIG. 2, the power interface 130 of the charger 100 may be a direct current power interface 131 or an alternating current power interface 132. Alternatively, the charger 100 may be provided with both a direct current power interface 131 and an alternating current power interface 132. The direct current power interface 131 receives a direct current from the battery pack 400, and the alternating current power interface 132 receives an alternating current from the mains electricity. In some examples, the direct current power interface 131 (or the alternating current power interface 132) receives electric energy through an alternating current charger 500. The alternating current charger 500 has a plug connectable to the power grid and an interface that can be adapted and coupled to the direct current power interface 131 (or the alternating current power interface 132). The alternating current charger 500 may be provided with electric energy processing circuits such as voltage conversion circuits (an AC-DC circuit, an AC-AC circuit, and a buck-boost circuit). In some examples, the direct current power interface 131 may receive the direct current supplied by the battery pack 400. A battery pack coupled to the charging interface 120 is denoted as the first battery pack 200, and a battery pack coupled to the direct current power interface 131 is denoted as the second battery pack 400. The first battery pack 200 is the battery pack for the power tool and can supply power to the power tool 300 after being charged. The second battery pack 400 may be the battery pack for the power tool, and both the first battery pack 200 and the second battery pack 400 may supply power to the power tool 300 after being detached. The second battery pack 400 may not be the battery pack for the power tool. For example, the second battery pack 400 may be exclusively used by the charger. In addition, the capacity, volume, and the like of the second battery pack 400 may be greater than those of the first battery pack 200. The case where the second battery pack 400 is connected to the direct current power interface 131 in a non-detachable manner is not excluded. The drive assembly 140 is electrically connected between the charging interface 120 and the direct current power interface 131 mentioned above and can transfer the electric energy of the second battery pack 400 to the first battery pack 200.

In some examples, part of the charging interfaces 120 also serve as direct current power interfaces 131. The battery pack 200/the battery pack 400 coupled to the interface 120/the interface 131 may charge itself or may discharge electricity to charge other battery packs 200. For example, an interface for mounting the second battery pack 400 may be specified on the charger 100, which is distinguishable from the charging interface 120 for mounting the first battery pack 200. Alternatively, a user may operate and control the battery pack 200/the battery pack 400 mounted to the charger 100 to perform a charging action or a discharging action. Alternatively, after the battery pack 200/400 is mounted to the interface, the charger 100 may determine, based on certain logic, whether the battery pack currently performs the charging action or the discharging action.

In some examples, the charger 100 is provided with both the alternating current power interface 132 and the preceding direct current power interface 131 coupled to the second battery pack 400. In the case where the alternating current power interface 132 is enabled, in one example, the drive assembly 140 charges the first battery pack 200 with an alternating current from the alternating current power interface 132, and the direct current power interface 131 and the second battery pack 400 at the direct current power interface 131 may not operate. Alternatively, if the direct current power interface 131 has both functions, the drive assembly 140 may also use the alternating current to charge the first battery pack 200 and the second battery pack 400, and the interface connected to the second battery pack 400 operates in the form of the charging interface 120. In another example, the drive assembly 140 charges the second battery pack 400 with the alternating current from the alternating current power interface 132, the drive assembly 140 charges the first battery pack 200 with a direct current from the direct current power interface 131, and the interface connected to the second battery pack 400 operates in the form of the direct current power interface 131. In the case where the alternating current power interface 132 is not enabled, the drive assembly 140 may charge the first battery pack 200 with the direct current from the direct current power interface 131. In the preceding example provided with the alternating current power interface 132, the drive assembly 140 may include an alternating current-direct current converter to convert the inputted alternating current such as the mains electricity into a direct current to charge the battery pack 200.

In some examples, a cascade relationship may exist between chargers 100. A charger 100 mounted with the battery pack 200 may be used as a direct current external power supply and cascaded with other chargers 100. In addition to the interface coupled to the second battery pack 400, the preceding direct current power interface 131 may further include an interface cascaded with another charger 100. In some examples, the charger 100 further includes a photovoltaic module 160. The photovoltaic module 160 may be disposed on the housing 110 of the charger 100 and can convert light energy to electric energy. In addition to the interface coupled to the second battery pack 400, the preceding direct current power interface 131 may further include an interface connected to the photovoltaic module 160 to obtain the electric energy converted from the light energy. It is to be understood that the direct current power interface 131 cascaded with the charger 100, the direct current power interface 131 connected to the photovoltaic module 160, and the direct current power interface 131 coupled to the second battery pack 400 may be different interfaces. This provides more forms of electric energy sources for the charger 100 to ensure normal running of the charger 100. It is to be noted that the charger 100 may be provided with at least the direct current power interface 131 coupled to the second battery pack 400 in the present application. Furthermore, the charger 100 may also be provided with the direct current power interface 131 and/or the alternating current power interface 132 in another form described above.

In an alternative implementation of the present application, as described above, the charger 100 of the battery pack 200 for the power tool includes at least the housing 110, the charging interface 120 for coupling and charging the first battery pack 200, the direct current power interface 131 for coupling and supplying power to the second battery pack 400, and the drive assembly 140 (the drive assembly 140 transfers electric energy from the second battery pack 400 to the first battery pack 200) that transfers electric energy between the interfaces. The maximum output power of the drive assembly 140 of the charger 100 is greater than or equal to 2000 W, and the first battery pack 200 and the second battery pack 400 are both detachably connected to the charger 100, so as to be detached and then mounted to the power tool 300 and supply power to the power tool 300. Thus, various battery packs 200 for the power tool can be mutually charged through the charger 100 quickly, electric energy is transferred in a high-speed and efficient mode in the scenario where various different power tools 300 are used and various different battery packs 200 are used, the types of tools selectable by the user during work are greatly increased, and the battery lifetime of various types of tools is greatly prolonged.

In some examples, the total capacity of the preceding second battery pack 400 is greater than the total capacity of the first battery pack 200 so that the second battery pack 400 can charge one or more first battery packs 200. In some examples, the total capacity of the preceding first battery pack 200 is less than or equal to 1 kWh, and the total capacity of the second battery pack 400 is greater than or equal to 2 kWh. In some examples, the rated voltage of the preceding first battery pack 200 is substantially the same as the rated voltage of the preceding second battery pack 400 so that similar voltage plateaus are maintained for transferring electric energy. In some other examples, the rated voltage of the preceding first battery pack 200 may be different from the rated voltage of the preceding second battery pack 400.

In some examples, the first battery pack 200 coupled to and charged through the charging interface 120 may supply power to a handheld power tool after being detached. After the second battery pack 400 coupled to the direct current power interface 131 and discharging electricity to charge the first battery pack 200 is detached, the second battery pack 400 may supply power to a wheeled power tool. The energy consumption of the wheeled power tool is generally higher than that of the handheld power tool. Therefore, the battery pack 200 for the power tool is charged through the battery pack 400 for the wheeled power tool with higher parameter values such as the total capacity and the output power, which has a better effect in the preceding scenario.

In some examples, electrochemical properties of the cells in the preceding first battery pack 200 may be different from electrochemical properties of cells in the preceding second battery pack 400. In some examples, the different electrochemical properties of the cells may refer to different materials of positive and negative electrodes of the cells. Exemplarily, one of the first battery pack 200 and the second battery pack 400 adopts lithium iron phosphate cells, and the other adopts ternary lithium cells. For example, the second battery pack 400 emphasizing endurance may adopt the lithium iron phosphate cells, and the first battery pack 200 emphasizing a discharging capability may adopt the ternary lithium cells.

In some examples, the drive assembly 140 charges the first battery pack 200 and/or the second battery pack 400 simultaneously or in different periods with the alternating current from the alternating current power interface 132. Exemplarily, the charger 100 includes the alternating current-direct current converter for converting the alternating current from the alternating current power interface 132 to provide a corresponding form of electric energy for the first battery pack 200 and/or the second battery pack 400.

In an alternative implementation of the present application, as described above, the charger 100 of the preceding battery pack 200 for the power tool includes at least the housing 110, the charging interface 120 for coupling and charging the first battery pack 200, the direct current power interface 131 for coupling and supplying power to the second battery pack 400, and the drive assembly 140 (the drive assembly 140 transfers electric energy from the second battery pack 400 to the first battery pack 200) that transfers electric energy between the interfaces. The ratio of the maximum output power of the drive assembly 140 of the charger 100 to the volume of a drive box 142 of the drive assembly 140 is greater than or equal to 0.7 W/cm³. That is, the drive assembly 140 of the charger 100 has a high volumetric power density. The drive assembly 140 can better meet the requirements of the battery pack 200 for fast and efficient charging and the portability requirement of the charger 100 when the power tool 300 is carried out for outdoor work or works for a long time.

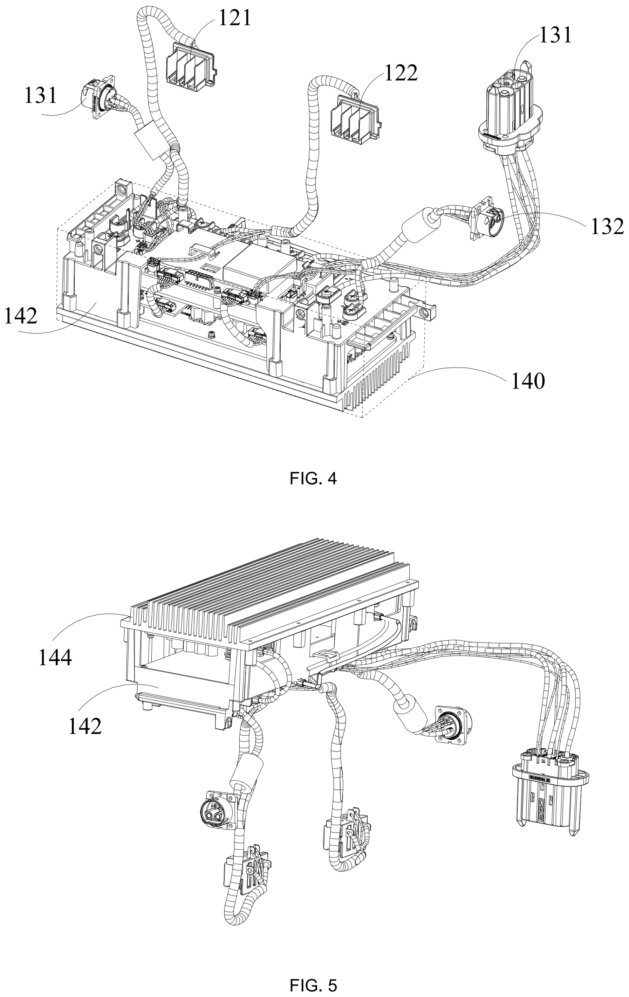

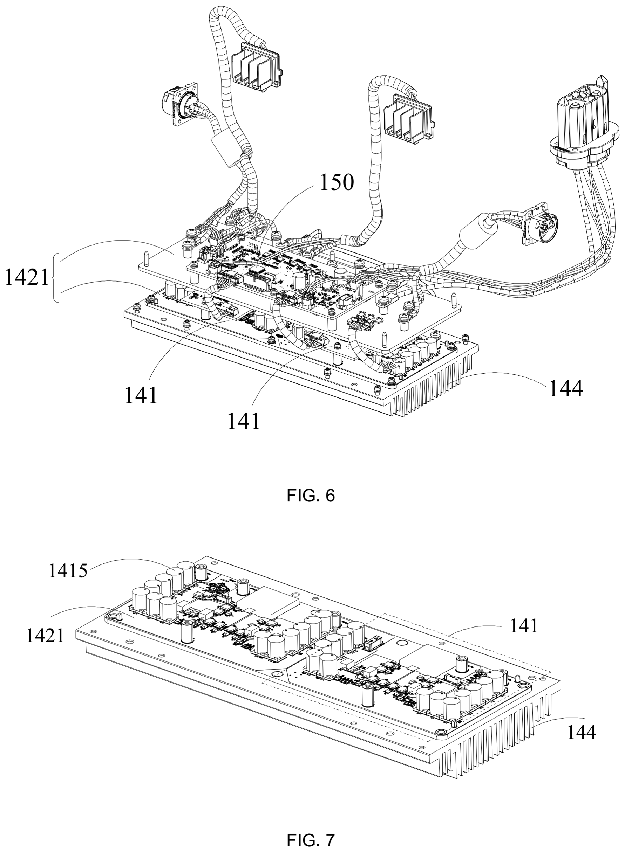

The drive assembly 140 may include the drive box 142 and one or more power modules 141. Both the drive box 142 and the one or more power modules 141 are physical entities herein. The preceding housing 110 of the charger 100 may be regarded as an outer housing. The drive box 142 may be regarded as an inner housing that is located in the outer housing 110 of the charger 100 and accommodates the preceding one or more power modules 141. In some examples, in addition to the one or more power modules 141, the drive box 142 may further accommodate the controller 150 or other related parts and components and an electronic circuit necessary for electrical connection. As shown in FIGS. 4 to 7, in some examples, the drive box 142 is disposed at a lower portion of the charger 100 and may be located below the charging interface 120 and/or the direct current power interface 131 and/or the alternating current power interface 132. The one or more power modules 141 are electrically connected between the direct current power interface 131 and the charging interface 120 and can transfer electric energy from the direct current power interface 131 and the second battery pack 400 to the charging interface 120 and the first battery pack 200. Each of the one or more power modules 141 may be constituted by functionally related electronic components and electronic circuits. The related electronic components may include a transistor such as a metal-oxide-semiconductor field-effect transistor (MOSFET) or an insulated-gate bipolar transistor (IGBT), a capacitor, an inductor, and a resistor. For the specific structures of each of the one or more power modules 141, reference may be made to the following description. As shown in FIGS. 5 and 6, in some examples, the preceding one or more power modules 141 may be disposed on a circuit board 1421, and one or more circuit boards 1421 provided with the one or more power modules 141 or further provided with the controller 150 are disposed and accommodated in the drive box 142.

The maximum output power of the drive assembly 140 is the maximum charging power that the charger 100 can provide. The maximum output power of the drive assembly 140 may be the maximum output power that can be provided on a single charging interface 120 or the sum of the maximum output power that can be provided on multiple charging interfaces 120 simultaneously. In some examples, the maximum output power of the drive assembly 140 is also the sum of the maximum output power of the multiple power modules 141.

The drive box 142 is substantially in the shape of a rectangular cuboid. In some examples, as shown in FIG. 4, it is assumed that the plane on which the bottom surface of the drive box 142 is located is perpendicular to the straight line on which an up and down direction is located. The volume of the drive box 142 may be defined as the product of the maximum distances occupied by the drive box 142 in the up and down direction, a front and rear direction, and a left and right direction, respectively, that is, the drive box 142 is regarded as a rectangular cuboid for calculating the volume thereof. In some other examples, the drive box 142 has an upper end surface parallel to the bottom surface, and at least part of the power modules 141 coincides with a projection of the upper end surface along the up and down direction. The spacing between the bottom surface of the drive box 142 and the upper end surface of the drive box 142 in the up and down direction is the height of the drive box 142, and the volume of the drive box 142 may be defined as the product of the bottom area of the drive box 142 and the height of the drive box 142. In some examples, the volume of the drive box 142 of the charger 100 may be less than or equal to 3500 cm³. In some examples, the volume of the drive box 142 is less than or equal to 3400 cm³. In an example, the volume of the drive box 142 is calculated as the product of the maximum spacings in the up and down direction, the front and rear direction, and the left and right direction, which is 10 cm*12 cm*28 cm.

In some examples, the height of the drive box 142 is greater than or equal to 8 cm and less than or equal to 15 cm. That is, the plane where the bottom surface of the drive box 142 is located is perpendicular to the straight line where the up and down direction is located, and the distance between the uppermost end of the drive box 142 and the lowermost end of the drive box 142 along the up and down direction is greater than or equal to 8 cm and less than or equal to 15 cm. Alternatively, the spacing between the bottom surface of the drive box 142 and the upper end surface of the drive box 142 parallel to the bottom surface of the drive box 142 is greater than or equal to 8 cm and less than or equal to 15 cm.

In some examples, the drive assembly 140 may not have a physical drive box 142, and the ratio of the maximum output power of the drive assembly 140 to the volume of the drive assembly 140 is greater than or equal to 0.7 W/cm³. The volume of the drive assembly 140 may be defined as the product of the maximum distances occupied by components of the drive assembly 140 including at least the one or more power modules 141 in the up and down direction, the front and rear direction, and the left and right direction, respectively. In some examples, the volume of the drive assembly 140 does not exceed the volume of the internal cavity of the housing 110 of the charger 100 at most.

In some examples, as shown in FIGS. 6 and 7, the power module 141 of the drive assembly 140 includes energy storage elements 1415, and the height of each of the energy storage elements 1415 is less than or equal to 25 mm. For example, the energy storage elements 1415 may include a capacitor, an inductor, and the like. The energy storage elements 1415 are disposed on the circuit board 1421 parallel to the bottom surface of the drive box 142, and the height of each of the energy storage elements 1415 may be the height of each of the energy storage elements 1415 in the up and down direction. In some examples, the volume of the inductor included in the drive assembly 140 is less than or equal to 20000 mm³. In some examples, the capacitance of the capacitor included in the drive assembly 140 is less than or equal to 1000 µF.

In some examples, as shown in FIG. 3, fans 143 for heat dissipation are further accommodated in the drive box 142. Alternatively, the drive box 142 has an opening facing the fans 143 accommodated in the housing 110. In some examples, the plane where the fans 143 are located may be perpendicular to the plane where the circuit board 1421 provided with the power modules 141 and the like is located. Alternatively, the plane where the fans 143 are located may be parallel to the plane where the opening on a side surface of the drive box 142 is located. Heat dissipation airflows blown out or sucked by the fans 143 can flow across the circuit board 1421, the drive assembly 140, the controller 150, and the like. In some examples, the volume of the space occupied by the fans 143 in the drive box 142 is less than or equal to 100 cm³. The fans 143 can utilize a space on a side of the circuit board 1421 and have relatively small volumes without affecting the portability of the charger 100.

In some examples, as shown in FIGS. 6 and 7, aluminum substrates 1421 may be used in the drive box 142 to carry components such as the power modules 141 of the drive assembly 140. The aluminum substrates 1421 may be disposed at the bottom of the drive box 142. The power modules 141, the controller 150, and other related electronic components may be welded to the aluminum substrates 1421 so that the drive assembly 140 or the power modules 141 are supported and fixed in the drive box 142. In addition, heat from the power modules 141 and the like may be effectively dissipated due to good heat dissipation performance of the aluminum substrates 1421. In some examples, one of the aluminum substrates 1421 is the bottom plate of the drive box 142. In some examples, the thickness of each of the preceding aluminum substrates 1421 is less than or equal to 3 mm.

In some examples, as shown in FIGS. 6 and 7, a heat sink 144 is further disposed on any side surface of the drive box 142. Exemplarily, the heat sink 144 may include a base (a fin base) in thermal contact with the bottom surface of the drive box 142 and multiple parallel fins that are perpendicular to the base and are arranged at intervals. Referring to the preceding example, the heat sink 144 may be in thermal contact with an aluminum substrate 1421. For example, the heat sink 144 may be fixed on the back surface of the aluminum substrate 1421 through bolts, screws, or the like to further conduct the heat generated by the drive assembly 140 or the power modules 141 outward, where the back surface of the aluminum substrate 1421 is not a surface to which a circuit is welded.

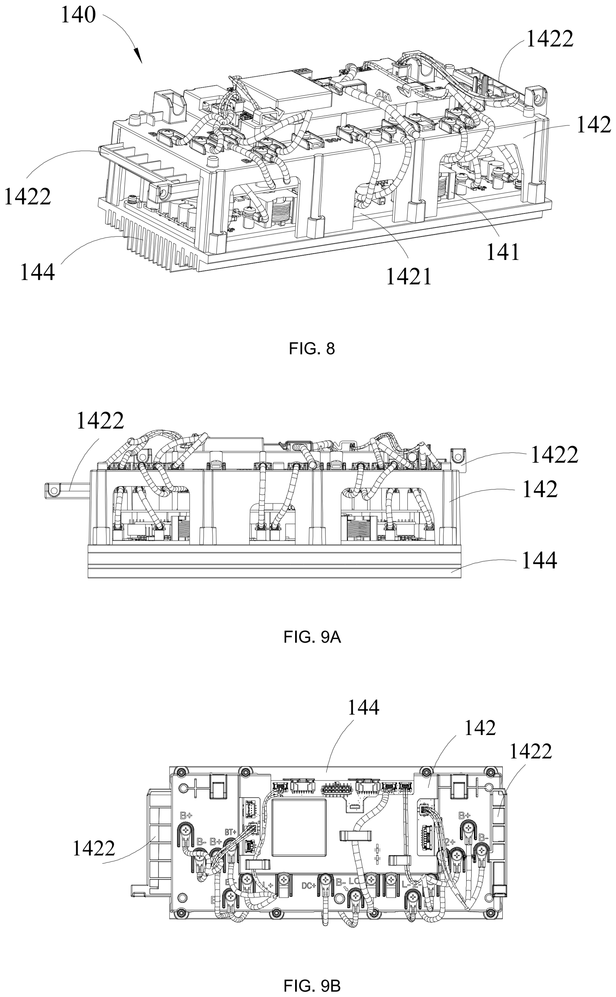

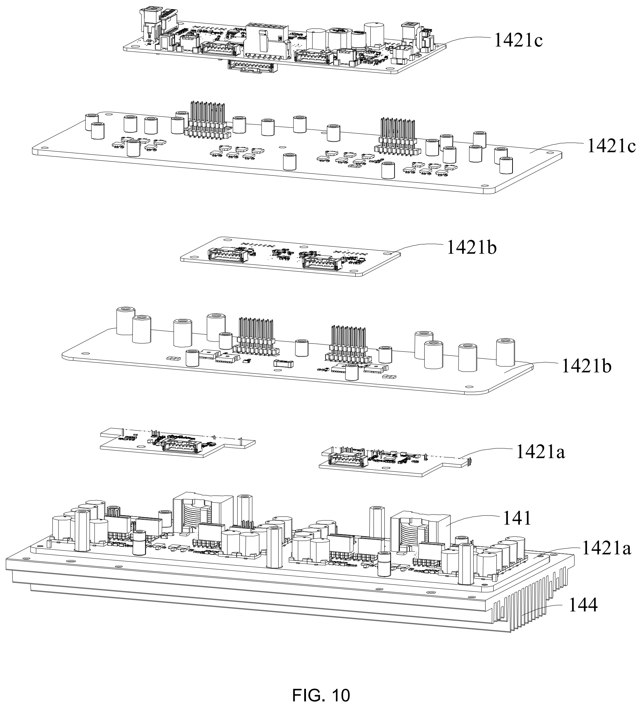

In an alternative implementation, referring to FIGS. 8 to 10, a solution for the internal structure of the charger 100 of the battery pack 200 for the power tool is shown. As described above, the drive assembly 140 of the charger 100 includes the multiple power modules 141 connected in parallel, and the multiple power modules 141 are also accommodated inside the drive box 142. Similar to the preceding description, the drive box 142 is substantially in the shape of a rectangular cuboid, may be disposed at an inner lower portion of the charger 100, and may be located below the charging interface 120 and/or the power interface 130. An accommodation space is formed inside the drive box 142. The one or more circuit boards 1421 integrated with the preceding multiple power modules 141 connected in parallel and other related electronic circuits are accommodated and fixed in the accommodation space inside the drive box 142. In some examples, the heat sink 144 is disposed on any one or more side surfaces of the preceding drive box 142. As shown in FIGS. 8 and 10, optionally, the heat sink 144 is disposed on the bottom surface of the drive box 142. The fin base of the heat sink 144 is attached to the bottom surface of the drive box 142 or integrated on the bottom surface of the drive box 142. The multiple parallel fins of the heat sink 144 that are arranged at intervals extend outward from the fin base to conduct heat from the drive box 142 outward. Optionally, the extension lengths of the fins located at main heat dissipation positions such as the fin base or the central portion of the bottom surface of the drive box 142 may be appropriately increased so that effective heat dissipation areas of the fins are increased. Thus, the heat dissipation effect of the heat sink 144 on the drive box 142 is further improved.

In some examples, the drive box 142 and the housing 110 of the charger 100 mate with each other and are assembled together in the manner of inner and outer housings. Exemplarily, guide portions 1422 which can mate with sliding grooves 111 on inner walls of the housing 110 can be formed on the left and right end surfaces or other end surfaces of the drive box 142. Optionally, the sliding grooves 111 and the guide portions 1422 may extend substantially along the front and rear direction. In an assembly process, positioning can be performed through the guide portions 1422 on the side end surfaces of the drive box 142 and the sliding grooves 111 on the inner walls of the housing 110. After the guide portions 1422 extend into the sliding grooves 111, the guide portions 1422 and the sliding grooves 111 mate with each other and guide the drive box 142 such that the drive box 142 can be pushed into the housing 110. In addition, the drive box 142 can be limited in the housing 110. Furthermore, a locking member such as a bolt or a screw may be disposed at and mate with an outer end of each of the guide portions 1422 of the drive box 142 relative to a respective one of the sliding grooves 111, so as to lock the drive box 142 in the housing 110. In addition, the drive box 142 and the heat sink 144 at the bottom of the drive box 142 do not exceed the range of the outer housing from a top view and do not interfere with the assembly of the entire machine.

In some examples, the multiple circuit boards 1421 are arranged in the drive box 142 from bottom to top. The multiple circuit boards 1421 are stacked along the up and down direction so that the overall structure is compact. In addition, with reasonable circuit deployment, electrical connection line arrangement for electric energy transfer and signal transmission between each other is facilitated. Exemplarily, as shown in FIG. 10, the circuit board 1421 integrated with the preceding multiple power modules 141 connected in parallel may be disposed at the lowest layer, and then the circuit board 1421 where a related control circuit for managing and controlling the running of the power modules 141 is located may be disposed. In some examples, among the multiple circuit boards 1421 arranged in the drive box 142 from bottom to top, one or more circuit boards 1421a where the power modules 141 and the control circuits thereof are located are at the lower layer, one or more circuit boards 1421c where an EMS module and the control circuit thereof are located are at an upper layer, and one or more circuit boards 1421b where a current equalization module and the control circuit thereof are located are disposed at an intermediate layer between the lower layer and the upper layer to serve scenarios such as the following single-interface and multi-interface charging modes. Exemplarily, the areas of the multiple circuit boards 1421 arranged from bottom to top in the drive box 142 sequentially decrease from the top view.

In some examples, a window is provided on a side surface of the drive box 142 such as the rear wall, and a terminal is disposed on a side surface of the drive box 142 such as the upper wall. The circuit board 1421 accommodated in the drive box 142 may be led out to the preceding terminal on the side surface through the preceding window on the side surface, so as to continue to be connected to another module outside the drive box 142 or may be directly led out to be connected to another module through the window on the side surface.

In an alternative implementation of the present application, as described above, the charger 100 of the battery pack 200 for the power tool has the multiple charging interfaces 120, and each charging interface 120 may be electrically connected to one battery pack 200 separately. The charger 100 further includes the drive assembly 140 for supplying power to each charging interface 120 and the controller 150 for controlling the electric energy transfer and the information interaction in the charger 100. The controller 150 can confirm a battery pack connection status of each of the preceding multiple charging interfaces 120 and adjust and control, based on the battery pack connection status, the maximum output power allocated to each charging interface 120 by the drive assembly 140.

The charger 100 has the at least two charging interfaces 120, and the at least two charging interfaces 120 can be used for coupling and charging at least one type of battery pack 200. The battery pack connection status of the charging interface 120 includes at least information on whether the charging interface 120 is connected to the battery pack 200. The controller 150 can at least perform global determination based on information on whether each charging interface 120 is connected to the battery pack 200 and then adjust and control the maximum output power allocated to each charging interface 120 by the drive assembly 140, that is, electric energy allocated to each charging interface 120 is adjusted and controlled. Many alternative implementations are available for the controller 150 to confirm whether the battery pack 200 is connected to the charging interface 120. For example, the controller 150 may determine, according to a potential change at the charging interface 120, whether the battery pack 200 is connected to the charging interface 120. For another example, the controller 150 may determine, according to a data signal transmitted by the battery pack 200 through the charging interface 120, whether the battery pack 200 is connected to the interface. In summary, the battery pack connection status is autonomously determined by the controller 150. The lower limit of the maximum output power allocated to one charging interface 120 may be zero, that is, the controller 150 controls the drive assembly 140 to not supply power to the interface. The upper limit of the maximum output power allocated to one charging interface 120 may reach the maximum output power of the charger 100, that is, the controller 150 controls the drive assembly 140 to supply power only to the interface. The maximum output power of each charging interface 120 may be equal or unequal.

In some examples, the controller 150 confirms the battery pack connection status of each of the multiple charging interfaces 120 through real-time detection. Any battery pack 200 is mounted to or separated from any charging interface 120, which will immediately trigger the controller 150 to update information on the charging interface 120. The controller 150 may adjust a power allocation of the drive assembly 140 immediately after the information on any charging interface 120 is updated.

In some examples, after confirming the battery pack connection status of each charging interface 120, the controller 150 may allocate, according to the number of charging interfaces 120 connected to battery packs 200, the power provided by the drive assembly 140. In some examples, the controller 150 at least controls the drive assembly 140 not to allocate power to a charging interface 120 to which no battery pack 200 is connected. In some examples, the controller 150 controls the drive assembly 140 to evenly allocate available power to the charging interfaces 120 to which the battery packs 200 are connected. When only one charging interface 120 of the charger 100 is connected to the battery pack 200, the maximum output power allocated to the charging interface 120 is the maximum output power of the drive assembly 140 or the maximum output power of the charger 100. All electric energy of the drive assembly 140 or the charger 100 is supplied to the charging interface 120, and no electric energy is supplied to the remaining charging interfaces 120. In the case where multiple charging interfaces 120 of the charger 100 are connected to the battery packs 200, the maximum output power allocated to the multiple charging interfaces 120 may be equal or approximately equal. The value of the maximum output power allocated to each of the multiple charging interfaces 120 may be the ratio of the maximum output power of the drive assembly 140 or the charger 100 to the number of the interfaces connected to the battery packs 200, and no electric energy is supplied to the other charging interfaces 120 to which no battery pack 200 is connected. In some examples, when controlling the power allocation, the controller 150 excludes a battery pack 200 that is connected to the charging interface 120 but does not meet a charging requirement. For example, even if the battery pack 200 is connected to a certain charging interface 120, the controller 150 controls the drive assembly 140 to not allocate power to the battery pack 200 when confirming that the battery pack 200 has a safety risk such as an overtemperature or a failure.

The illustration is performed in conjunction with an example. It is assumed that the maximum output power of the charger 100 or the drive assembly 140 thereof is 2500 W, and the charger 100 has two charging interfaces 120: a first charging interface 121 and a second charging interface 122. In the case where only the first charging interface 121 is connected to the battery pack 200, the controller 150 controls the drive assembly 140 to supply all of electric energy of 2500 W to the first charging interface 121. In the case where only the second charging interface 122 is connected to the battery pack 200, the controller 150 controls the drive assembly 140 to supply all of the electric energy of 2500 W to the second charging interface 122. In the case where both the first charging interface 121 and the second charging interface 122 are connected to the battery pack 200, the controller 150 controls the drive assembly 140 to evenly supply electric energy of 1250 W to the first charging interface 121 and the second charging interface 122.

In some other examples, the battery pack connection status of the charging interface 120 further includes specific information on the battery pack 200 connected to the charging interface 120. The specific information includes but is not limited to the temperature, voltage, current, total capacity, electric quantity/SOC, and model of the battery pack 200. One or more of the preceding pieces of information are transmitted to the controller 150 of the charger 100. The controller 150 performs the global determination based on the information on whether each charging interface 120 is connected to the battery pack 200 and the preceding specific information on the battery pack 200 connected to the charging interface 120, and then the controller 150 adjusts and controls the maximum output power allocated by the drive assembly 140 to each charging interface 120. The specific information on the preceding battery pack 200 may be transmitted to the controller 150 in a wired manner through the charging interface 120 and an electronic cable in the housing 110, or the interaction of the specific information may be performed wirelessly after the battery pack 200 is mounted to the charging interface 120.

In some examples, according to the specific information on the battery pack 200 connected to the charging interface 120, the controller 150 further allocates, in a more complex manner than the average allocation described above, the maximum output power provided by the drive assembly 140 for each of the preceding charging interfaces 120. In an example, the charging interfaces 120 or the battery packs 200 at the charging interfaces 120 are classified. In the case where at least two types of battery packs 200 are correspondingly connected to at least two types of charging interfaces 120, respectively, the controller 150 may control a range of the maximum output power allocated to one type of charging interface 120 connected to a corresponding type of battery pack 200 to be different from a range of the maximum output power allocated to another type of charging interface 120 connected to another corresponding type of battery pack 200. For example, the charger 100 has charging interfaces 120-1 to 120-3. The charging interface 120-1 and the charging interface 120-2 are one type of interface and are connectable to one type of battery pack 200-1. The charging interface 120-3 is another type of interface and is connectable to another type of battery pack 200-2. In the case where at least one of the charging interface 120-1 and the charging interface 120-2 is connected to the battery pack 200-1 and the charging interface 120-3 is connected to the battery pack 200-2, the maximum output power allocated to the charging interface 120-1 and/or the charging interface 120-2 is unequal to the maximum output power allocated to the charging interface 120-3. In another example, the controller 150 has a preset rule for performing power allocation based on at least one of parameters such as the electric quantity/SOC, voltage, temperature, and total capacity of the battery pack 200 connected to the charging interface 120. After confirming the specific information on the connected battery pack 200, the controller 150 may substitute the specific information into the preceding preset rule to adjust and control the maximum output power allocated to each charging interface 120 by the drive assembly 140. For example, the smaller the electric quantity of the battery pack 200 connected to the charging interface 120, the lower the voltage of the battery pack 200 connected to the charging interface 120, the lower the temperature of the battery pack 200 connected to the charging interface 120, or the larger the total capacity of the battery pack 200 connected to the charging interface 120, the higher the maximum output power that can be allocated to the charging interface 120. In addition, the allocation of the maximum output power to the interface should be performed on the premise of ensuring safety, and the maximum output power should not exceed the upper limit of the power allowed by the battery pack 200.

In some examples, the controller 150 controls the power allocation of the drive assembly 140 to each charging interface 120 based on the battery pack connection status. That is, the controller 150 controls power transfer of the multiple power modules 141 in the drive assembly 140 to the charging interfaces 120 based on the battery pack connection status. The multiple power modules 141 are allocated to the charging interfaces 120 in different manners so that the power allocation of the drive assembly 140 to each charging interface 120 is implemented. Exemplarily, assuming that the drive assembly 140 has n power modules, the n power modules are allocated to the charging interfaces 120 currently connected to the battery packs 200 when the controller 150 controls the power allocation.

In an alternative implementation, as described above, the charger 100 of the battery pack 200 for the power tool has the two charging interfaces 120: the first charging interface 121 and the second charging interface 122. Each of the first charging interface 121 and the second charging interface 122 may be electrically connected to one battery pack 200. The charger 100 further includes the drive assembly 140 that supplies power to the first charging interface 121 and/or the second charging interface 122 and the controller 150 that manages and controls the electric energy transfer and the information interaction in the charger 100. The controller 150 can control the drive assembly 140 to allocate the maximum output power to the first charging interface 121 and the second charging interface 122 in a first charging mode and a second charging mode, respectively. In the case where both the first charging interface 121 and the second charging interface 122 are connected to the battery packs 200, the controller 150 controls the drive assembly 140 to operate in the first charging mode. In the case where only the first charging interface 121 is connected to the battery pack 200 or only the second charging interface 122 is connected to the battery pack 200, the controller 150 controls the drive assembly 140 to operate in the second charging mode. The maximum output power allocated to the first charging interface 121 or the second charging interface 122 in the first charging mode is unequal to the maximum output power allocated to the first charging interface 121 or the second charging interface 122 in the second charging mode. In addition, the maximum output power of the first charging interface 121 or the second charging interface 122 as the only one charging interface connected to the battery pack 200 in the second charging mode is greater than the maximum output power of the first charging interface 121 or the second charging interface 122 as one of the multiple charging interfaces 120 connected to the battery packs 200 in the first charging mode.

Exemplarily, the second charging mode is a single-pack mode, and the electric energy of the charger 100 can be supplied to the charging interface 120 where the battery pack 200 is located as much as possible. The first charging mode is a multi-pack mode, and the electric energy of the charger 100 is distributed to the multiple charging interfaces 120. The maximum output power that can be allocated to one charging interface 120 in the single-pack mode is higher than the maximum output power that can be allocated to each charging interface 120 in the multi-pack mode. Thus, the charger 100 in the second charging mode or the single-pack mode mentioned above can charge the battery pack 200 for the power tool more quickly and efficiently to enhance system endurance.

In some examples, the maximum output power of the first charging interface 121 or the second charging interface 122 only connected to the battery pack 200 in the second charging mode may be greater than or equal to 2000 W. Furthermore, the maximum output power may be greater than or equal to 2500 W. In some examples, the controller 150 and the drive assembly 140 may be provided with a third charging mode or more charging modes so that more complex power allocation can be performed on the first charging interface 121, the second charging interface 122, or more charging interfaces 120.

In some examples, the battery pack 200 is mounted to or separated from the first charging interface 121 or the second charging interface 122 such that the switchover of the controller 150 or the drive assembly 140 between the first charging mode and the second charging mode is triggered in real time. At any moment, after the first one of the battery packs 200 is mounted to any charging interface 120, the charger 100 enters the second charging mode. Then, at any moment, after another battery pack 200 is mounted to another charging interface 120, the charger 100 enters the first charging mode. Then, at any moment, after a certain battery pack 200 is separated from the charging interface 120 where the battery pack 200 is located, the charger 100 returns to the second charging mode. In some examples, it is not excluded that the controller 150 has a viewing period for confirming the number of charging interfaces 120 connected to the battery packs 200 and may wait briefly before the switchover of the charging mode, so as to avoid frequent changes of the charging mode when the battery packs 200 are continuously inserted into the charger 100 or a to-be-charged battery pack 200 is replaced.

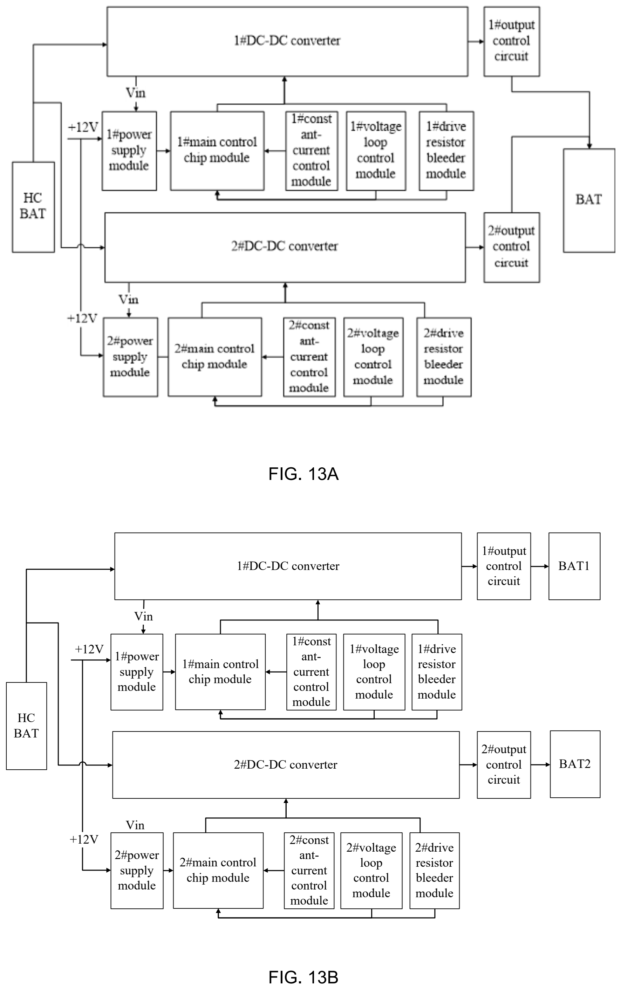

In some examples, referring to FIGS. 13A and 13B, the drive assembly 140 includes a first power module and a second power module. In the first charging mode, each of the first charging interface 121 and the second charging interface 122 is electrically connected to the battery pack 200, and the controller 150 may control the first power module to supply power to the first charging interface 121 and the battery pack 200 at the first charging interface 121 and may control the second power module to supply power to the second charging interface 122 and the battery pack 200 at the second charging interface 121. Alternatively, the controller 150 may control the first power module to supply power to the second charging interface 122 and the battery pack 200 at the second charging interface 122 and may control the second power module to supply power to the first charging interface 121 and the battery pack 200 at the first charging interface 121. In the second charging mode, only the first charging interface 121 is electrically connected to the battery pack 200 or only the second charging interface 122 is electrically connected to the battery pack 200, and the controller 150 may control the first power module and the second power module to collectively supply power to the first charging interface 121 or the second charging interface 122 that is only electrically connected to the battery pack 200 currently.

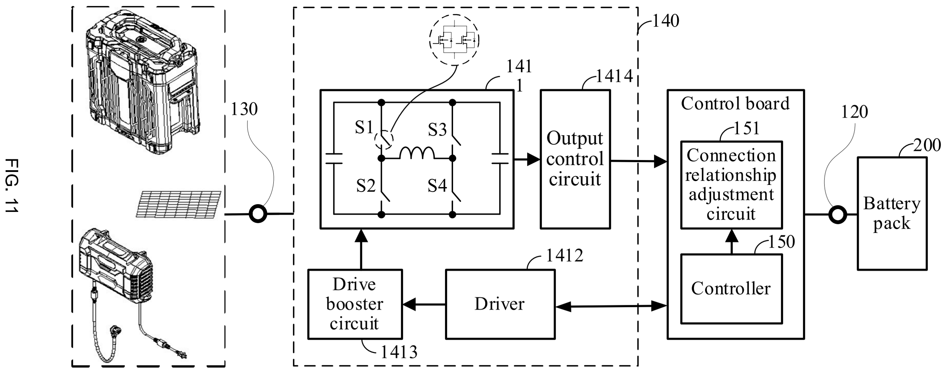

The following further describes a specific implementation in which the drive assembly 140 is controlled by the controller 150 to allocate power to each charging interface 120. Referring to FIGS. 11 to 13B, the drive assembly 140 in the present application may include the one or more power modules 141. Electric energy provided by one power module 141 is supplied to only one charging interface 120 at a time. In the case where the charger 100 has more than one charging interface 120, the drive assembly 140 may include the multiple power modules 141. In some examples, the number of the power modules 141 in the drive assembly 140 may be greater than or equal to the number of the charging interfaces 120 so that when each charging interface 120 is connected to the battery pack 200, at least one power module 141 can supply power to each charging interface 120. Exemplarily, the power module 141 may be electrically connected between the direct current power interface 131 and the charging interface 120 mentioned above. Of course, it is not excluded that the power module 141 is electrically connected between the alternating current power interface and the charging interface 120 mentioned above. The power module 141 may use at least one of electric energy sources such as the second battery pack, the photovoltaic module, and the mains electricity to supply power to the to-be-charged battery pack 200 for the power tool at the charging interface 120. For example, the multiple power modules 141 may use the same power input.

In some examples, the power module 141 includes a direct current-direct current converter 1411 and a driver 1412. The direct current-direct current converter (the DC-DC converter) 1411 may receive electric energy in a direct current form from the direct current power interface 131 and may perform voltage/power conversion, rectification, filtering, and other processing on the received electric energy. The driver 1412 may then send a drive signal to control the voltage/power conversion of the DC-DC converter 1411. Exemplarily, the DC-DC converter 1411 includes a switch transistor 1411a, and the driver 1412 may receive a control signal sent by the controller 150 based on the battery pack connection status and then send a corresponding drive signal to the switch transistor 1411a in the DC-DC converter 1411 based on the control signal. In some examples, the power supply of the driver 1412 and/or the controller 150 mentioned above may be implemented through the electric energy received by the direct current power interface 131. In some other examples, to avoid interference with the power module 141, the driver 1412 and/or the controller 150 mentioned above may be independently powered. In some examples, if the power module 141 can use electric energy from the alternating current power interface 132, the power module 141 may include the alternating current-direct current converter (the AC-DC converter).

In some examples, each power module 141 may also include an output control circuit 1414 such as an Oring control circuit. The output control circuit 1414 uses the output of the DC-DC converter 1411 as an input and may connect or disconnect the electric energy transfer line from the power module 141 to a target charging interface 120 under the control of the controller 150.

To meet performance expectations about the high speed and high efficiency of the charger 100 of the battery pack 200 for the power tool, the lower limit value of the maximum output power of the drive assembly 140 of the charger 100 can be 2000 W, and the characteristics of being lightweight and convenient still need to be maintained. The drive assembly 140 uses the multiple controllable power modules 141 connected in parallel during the power supply to the charging interfaces 120 to disassemble the high-power and small-size tasks of the charger 100, and the tasks undertaken by the power modules 141 are reduced and the performance is optimized. The multiple power modules 141 of the charger 100 may be connected in parallel. The multiple power modules 141 may use the same power input and may be connected in parallel in some modes to supply power to the same charging interface 120. In some examples, the switching frequency of the switch transistor 1411a of the direct current-direct current converter 1411 in the power module 141 may be greater than or equal to 180 kHz. Furthermore, the switching frequency of the switch transistor 1411a may be greater than or equal to 200 kHz so that the volume, efficiency, and the like of each of the energy storage elements 1415 such as a capacitor and an inductor are optimized due to the reduction of the transferred electric energy born at a single time. In some examples, a four-switch buck-boost (FSBB) circuit may be used as the direct current-direct current converter 1411 in the power module 141. In some examples, a single switch transistor or multiple switch transistors connected in parallel may be used as the switch transistor 1411a receiving the drive signal in the direct current-direct current converter 1411. The switch transistors 1411a may be MOSFETs, IGBTs, or the like. In some examples, a drive booster circuit 1413 is further disposed in or externally connected to the driver 1412 in the power module 141 to improve the quality of the drive signal. The drive booster circuit 1413 may strengthen the drive signal and may also boost the supply power of the driver 1412. Thus, the operating performance of the charger 100 can be further improved in conjunction with the requirements of the high output power and the high switching frequency described above. In some examples, the preceding drive booster circuit 1413 includes but is not limited to a push-pull circuit, a totem pole, a driver chip, and a level shifter circuit. In some examples, an isolation device or circuit is disposed between the driver 1412 and the direct current-direct current converter 1411 to reduce the influence between the control circuit and the electric energy transfer circuit. In conclusion, the preceding drive assembly 140 includes multiple configurations such as the multiple power modules 141 which can be connected in parallel, which can effectively improve the power increase and loss reduction of the charger 100.

One power module 141 may receive a set of control signals from the controller 150. As described above, the direct current-direct current converter 1411 of the power module 141 may receive a set of drive signals sent by the driver 1412 based on the set of control signals from the controller 150. Assuming that the charger 100 is provided with power modules 141-1 to 141-n, the controller 150 may send corresponding control signals (corresponding control signal sets) A1 to An to the power modules 141-1 to 141-n, respectively. A control signal Ai (i is any natural number from 1 to n) may adjust and control output power of a power module 141-i. In addition, the controller 150 may further adjust the connection relationship between each power module 141 and the charging interface 120. In some examples, the controller 150 or the control module/control board where the controller 150 is located has a connection relationship adjustment circuit 151, which can receive electric energy outputted by each power module 141-i under the control signal Ai. In addition, a second control signal B is also received from the controller 150, and the connection relationship adjustment circuit 151 may transfer, in response to the second control signal B, the electric energy provided by the power modules 141 to different charging interfaces 120. In some examples, the preceding connection relationship adjustment circuit 151 includes multiple second switch transistors. The charging interface 120 to which the electric energy provided by the power module 141 is finally transferred is determined by the specific topology of the connection relationship adjustment circuit 151 and whether each of the second switching transistors in the topology is turned on or off under the second control signal B.

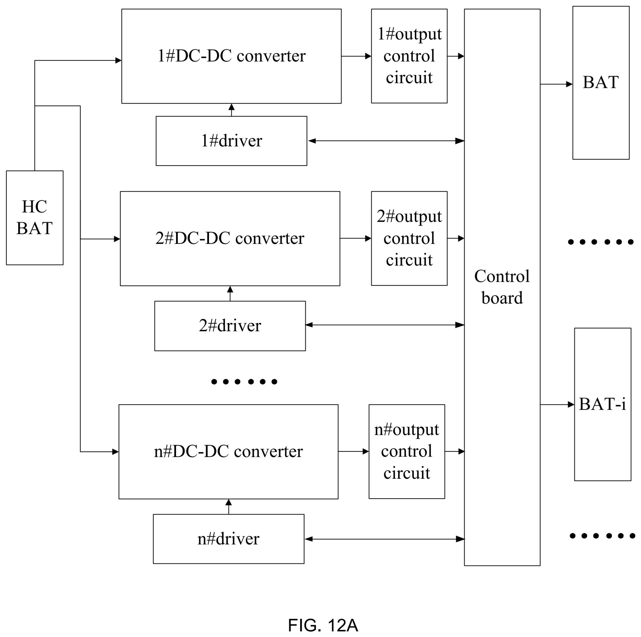

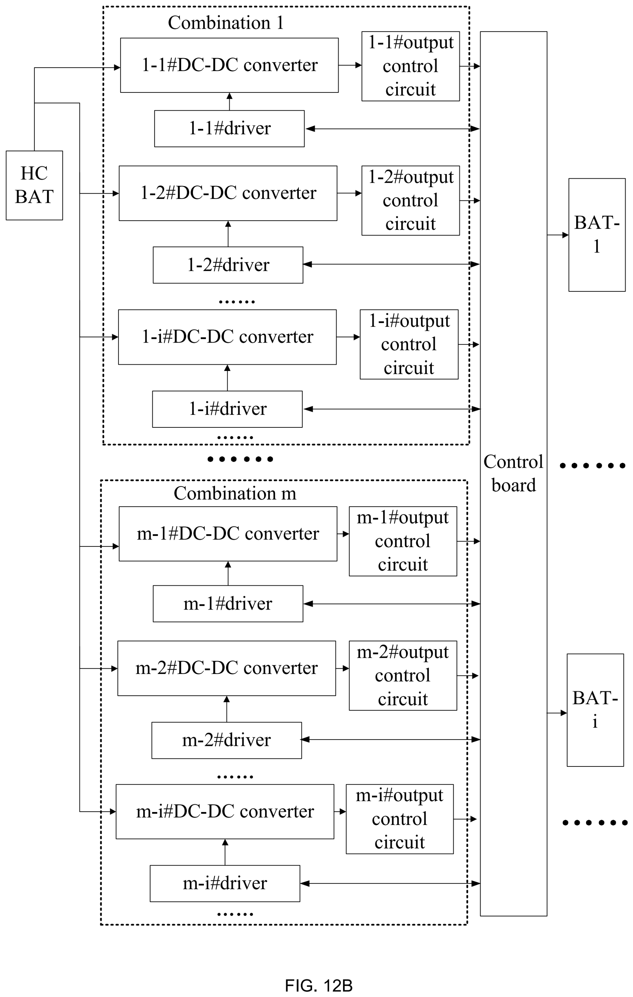

In some examples, as shown in FIG. 12A, the power modules 141 serve as independent units to supply power to the charging interfaces 120. The control signal Ai of the controller 150 determines the output power Pi of the power module 141-i. The control signal B of the controller 150 determines which power modules 141-p (p refers to several natural numbers from 1 to n) a charging interface 120-i can obtain output power from and the sum Σ*ₚ Pₚ* of the output power obtained from these power modules 141-p. In some other examples, as shown in FIG. 12B, one or more power modules 141 may supply power to the charging interface 120 as a combination. The power modules 141-1 to 141-n form combinations G1 to Gm (m is a natural number less than n), and output power of a combination Gj (j is any natural number from 1 to m) including one or more power modules 141 is Pj, where the one or more power modules 141 supply power as a whole. The control signal Ai of the controller 150 determines the output power Pi of the power module 141-i, and the control signal B of the controller 150 determines which combinations Gq (q refers to several natural numbers from 1 to m) the charging interface 120-i can obtain output power from and the sum Σ*_{q} P_{q}* of the output power obtained from the combinations Gq. In these examples, the maximum output power allocated by the drive assembly 140 to each charging interface 120 is adjusted and controlled through various means, including power adjustment performed on the single power module 141 by the drive signal and the output control circuit 1414, and also the adjustment of the connection relationship between the single power module 141 or the combination formed by the multiple power modules 141 connected in parallel and the multiple charging interfaces 120.

In an alternative implementation, as described above, the charger 100 of the battery pack 200 for the power tool has the multiple charging interfaces 120, and each charging interface 120 may be electrically connected to one battery pack 200 separately. The charger 100 further includes the multiple power modules 141, and each power module 141 may supply power to one of the multiple charging interfaces 120. The number of the power modules 141 is at least equal to the number of the charging interfaces 120, and the charger 100 further includes the controller 150 for managing and controlling the electric energy transfer and the information interaction in the charger 100. The controller 150 can confirm the battery pack connection status of each of the preceding multiple charging interfaces 120 and control and adjust the connection relationships between the multiple power modules 141 and the multiple charging interfaces 120 based on the battery pack connection status. For example, the controller 150 may adjust and control the branches from the power modules 141 to the charging interfaces 120 to be connected or disconnected, so as to transfer the electric energy outputted by the power modules 141 to the corresponding charging interfaces 120. For details, reference may be made to the preceding description, and the details are not repeated.

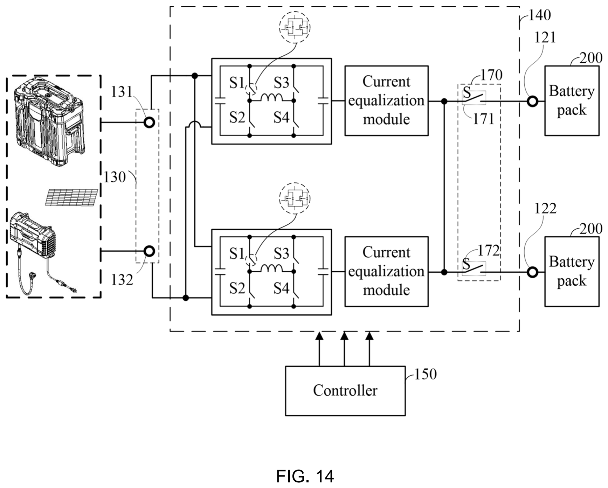

In an alternative implementation, as described above, referring to FIG. 14, the charger 100 of the battery pack 200 for the power tool has the at least two charging interfaces 120: the first charging interface 121 and the second charging interface 122. Each of the first charging interface 121 and the second charging interface 122 may be electrically connected to one battery pack 200. The charger 100 further includes the drive assembly 140 for supplying power to the first charging interface 121 and/or the second charging interface 122 and the controller 150 for controlling the electric energy transfer and the information interaction in the charger 100. The drive assembly 140 includes the multiple power modules 141 connected in parallel. The multiple power modules 141 connected in parallel can use the same power input and cooperatively charge battery packs 200 electrically connected to the at least two charging interfaces 120 mentioned above. The difference from the preceding implementation lies in that the multiple power modules 141 that are connected in parallel and included in the drive assembly 140 may always be connected in parallel and supply power to the one or more charging interfaces 120. In addition, the first charging interface 121 is electrically connected to the drive assembly 140 through a first electronic switch 171, and the second charging interface 122 is electrically connected to the drive assembly 140 through a second electronic switch 172. The controller 150 can acquire voltages of the battery packs 200 electrically connected to the first charging interface 121 and the second charging interface 122, respectively. In the case where the voltage of the battery pack 200 connected to the first charging interface 121 is higher than the voltage of the battery pack 200 connected to the second charging interface 122, and the voltage difference between the two battery packs 200 exceeds a preset voltage difference threshold, the controller 150 turns off the preceding first electronic switch 171. Correspondingly, in the case where the voltage of the battery pack 200 connected to the second charging interface 122 is higher than the voltage of the battery pack 200 connected to the first charging interface 121, and the voltage difference between the two battery packs 200 exceeds the preset voltage difference threshold, the second electronic switch 172 is turned off.

Exemplarily, the drive assembly 140 of the charger 100 uses the multiple power modules 141 connected in parallel to significantly improve the output capability of the charger 100. In addition, the charger 100 is provided with the at least two charging interfaces 120 and has the capability of simultaneously charging multiple battery packs 200 electrically connected to different charging interfaces 120. A relatively large voltage difference between the multiple battery packs 200 connected to the charging interfaces 120 is not conducive to process management and control of simultaneous charging of the multiple battery packs and has safety risks such as BMS false determination and a cross current on one hand. On the other hand, the relative electric quantity of the battery pack on a low-voltage side may be lower and needs to be replenished with a supply as soon as possible. In this implementation, an electronic switch 170 is disposed between each charging interface 120 and the drive assembly 140, where the on/off states of the electronic switch 170 are controlled by the controller 150. The electronic switch 170 is turned off, and the branch between the corresponding charging interface 120 and the drive assembly 140 is disconnected. That is, the loop through which the charger 100 charges the battery pack 200 connected to the charging interface 120 is disconnected, and the battery pack 200 cannot be charged. In this case, even if the battery pack 200 is connected to the charging interface 120 of the charger 100, the battery pack 200 is isolated from the charging process of the charger 100 and does not participate in or affect the charging of the charger 100. The electronic switch 170 is turned on, and the branch between the corresponding charging interface 120 and the drive assembly 140 is connected. That is, the loop through which the charger 100 charges the battery pack 200 connected to the charging interface 120 is connected, and the battery pack 200 can be charged. On this basis, in the case where the multiple battery packs 200 are connected, the controller 150 may acquire, through a sampling circuit such as a voltage divider circuit or an analog-to-digital conversion circuit or in other communication manners, the voltages of the battery packs 200 connected to the charging interfaces 120. The voltage of the battery pack 200 connected to the first charging interface 121 is denoted as U1, and the voltage of the battery pack 200 connected to the second charging interface 122 is denoted as U2. The controller 150 determines whether the voltage difference |*U*1 - *U*2| between the battery packs 200 exceeds the preset voltage difference threshold . In the case where the voltage difference |*U*1 - *U*2| between the battery packs 200 exceeds the preset voltage difference threshold , the electronic switch 170 connected to the charging interface 120 at which the battery pack 200 on a high-voltage side ((assuming that U1 is higher than U2, the battery pack connected to the first charging interface 121 is the battery pack on the high-voltage side, and the battery pack connected to the second charging interface 122 is the battery pack on the low-voltage side) is located is turned off. Thus, the battery pack 200 on the high-voltage side temporarily does not interfere with the charging process of the charger 100, it is ensured that the electric quantity of the battery pack 200 on the low-voltage side is quickly recovered, and the management and control of the related charging process does not have an unexpected risk.

In some examples, after performing the determination and turning off the first electronic switch 171, the controller 150 may control, based on the maximum charging current allowed by the battery pack 200 connected to the second charging interface 122, the maximum output power supplied by the drive assembly 140 to the second charging interface 122. The maximum charging current allowed by the battery pack 200 connected to the second charging interface 122 may be communicated to the controller 150 by the battery pack 200. Optionally, the maximum charging current allowed by the battery pack 200 may be pre-evaluated based on the electrical characteristic thereof and remain unchanged. Alternatively, the maximum charging current allowed by the battery pack 200 may be dynamically evaluated by the battery pack 200 along with a charging/discharging process thereof and may change with the use of the battery pack 200. It is not excluded that the maximum charging current allowed by the battery pack 200 is evaluated or calibrated by the controller 150. Then, the controller 150 of the charger 100 determines and controls, based on the known maximum charging current allowed by the battery pack 200, the corresponding output power provided by the drive assembly 140 for the second charging interface 122. In some examples, the controller 150 of the charger 100 controls the drive assembly 140 to cause the second charging interface 122 to charge the battery pack 200 with the maximum charging current or the maximum output power corresponding to the maximum charging current. In some examples, the controller 150 may control, in conjunction with more specific charging control logic, including but not limited to a combined design of one or more of constant-current (CC) charging, constant-voltage (CV) charging, and pulse charging at different stages, the drive assembly 140 to allocate the output power to the charging interface 120.

In some examples, each of the multiple power modules 141 that are connected in parallel and included in the drive assembly 140 is provided with a direct current-direct current converter, so as to convert electric energy from the power interface, the photovoltaic module, or the like into electric energy in a form suitable for charging the battery pack 200 at the charging interface 120. In some examples, the four-switch buck-boost (FSBB) circuit may be used as the direct current-direct current converter 1411 in the power module 141. The circuit implementation of the direct current-direct current converter 1411 involves the switch transistor 1411a. In some examples, as shown in FIGS. 11 and 14, the single switch transistor or the multiple switch transistors connected in parallel may be used as the switch transistor 1411a receiving the drive signal in the direct current-direct current converter 1411, thereby enhancing the performance efficiency and heat dissipation performance of the circuit. In addition, the use of the switch transistors connected in parallel in the direct current-direct current converter 1411 also imposes a higher requirement on the drive signal. In some examples, as shown in FIG. 11, the power module 141 is further provided with the drive booster circuit 1413 to adjust the drive signal to meet the expectation of the direct current-direct current converter 1411 using the switch transistors connected in parallel. For other descriptions of this example, reference may be made to the preceding related content.

In some examples, the preceding charger 100 includes the power interface 130 capable of supplying a current to the drive assembly 140. One or more power interfaces 130 may be provided. The one or more power interfaces 130 may include only the direct current power interface 131 providing the direct current, or may include only the alternating current power interface 132 providing the alternating current/the mains electricity, or may include both the direct current power interface 131 and the alternating current power interface 132. In some examples, the preceding direct current power interface 131 may be connected to a direct current power supply such as the second battery pack 400 and/or may be connected to another charger. That is, a cascade relationship for enabling stage-by-stage charging can be formed between the charger 100 and the charger. In some examples, in the case where the charger 100 supplies the alternating current from the alternating current power interface 132 to the drive assembly 140, the charger 100 further includes the alternating current-direct current converter, and the alternating current-direct current converter can convert the alternating current such as the mains electricity from the power grid into the direct current. Exemplarily, the multiple power modules 141 connected in parallel use the direct current converted by the alternating current-direct current converter as a common power input. In some examples, in the case where the charger 100 supplies the alternating current to the drive assembly 140, the maximum output power of the charger 100 is greater than or equal to 2000 W. The energy is supplied through the mains electricity in this example, which can significantly improve the endurance and performance of the charger 100.

In some examples, the power interfaces 130 of the charger 100 include both the direct current power interface 131 and the alternating current power interface 132. Moreover, the maximum output power of the charger 100 in the case where the alternating current power interface 132 is invoked to supply the current to the drive assembly 140 is greater than or equal to the maximum output power of the charger 100 in the case where the direct current power interface 131 is invoked to supply the current to the drive assembly 140. The output capability of the charger 100 in the case where the alternating current is supplied is stronger than the output capability of the charger 100 in the case where the direct current such as the direct current from the second battery pack 400 is supplied. In some examples, the controller 150 of the charger 100 preferentially uses the mains electricity supplied by the alternating current power interface 132 in the case where both the direct current power interface 131 and the alternating current power interface 132 can supply currents. Optionally, the controller 150 preferentially uses the direct current of the second battery pack 400 connected through the direct current power interface 131 in the case where the alternating current power interface 132 is not connected to the mains electricity. In some examples, the capacity of the second battery pack 400 is greater than the capacity of the (first) battery pack 200. Exemplarily, the capacity of the second battery pack 400 is greater than or equal to 2 kWh.

In some examples, relatively speaking, after the controller 150 acquires the voltages of the battery packs 200 electrically connected to the first charging interface 121 and the second charging interface 122, respectively, the charger 100 may charge the multiple battery packs 200 simultaneously in the case where the voltage difference between the battery packs 200 connected to the first charging interface 121 and the second charging interface 122 does not exceed the preset voltage difference threshold. Optionally, the drive assembly 140 uses the multiple power modules 141 connected in parallel to cooperatively supply power to the charging interfaces 120, and the first charging interface 121 and the second charging interface 122 may adaptively allocate the output power of the drive assembly 140. It is to be understood that in this implementation, the battery packs 200 connected to different charging interfaces 120 have approximately equal rated voltages (or nominal voltages). The battery packs 200 connected to different charging interfaces 120 may have approximately equal rated capacities (nominal capacities) or unequal rated capacities (nominal capacities). In the case where the actual voltages of the battery packs are approximately equal (the voltage difference does not exceed a threshold) to each other at present, the output power of the multiple power modules 141 connected in parallel may be adaptively allocated according to the differences between the battery packs 200 in the aspects of an internal resistance, aging, a temperature, and the like. Ideally, if the battery packs 200 connected to the first charging interface 121 and the second charging interface 122 are the same battery packs, the output power of the drive assembly 140 is evenly allocated to the two battery packs 200 in this case. If the battery packs 200 connected to the first charging interface 121 and the second charging interface 122 have equal voltages and unequal capacities, the output power allocated by the drive assembly 140 to the different battery packs 200 is substantially inversely proportional to the respective internal resistances of the battery packs 200.

In some examples, the controller 150 determines, by using the preset voltage difference threshold, that the charger 100 performs single-interface charging or multi-interface charging, where the preset voltage difference threshold is related to a current source (a power input) currently used by the drive assembly 140. In the case where the drive assembly 140 uses the direct current provided by the direct current power interface 131 as the supply current, the preset voltage difference threshold used by the controller 150 is recorded as a first preset voltage difference threshold. In the case where the drive assembly 140 uses the alternating current provided by the alternating current power interface 132 to obtain the supply current, the preset voltage difference threshold used by the controller 150 is recorded as a second preset voltage difference threshold. The second preset voltage difference threshold is greater than the first preset voltage difference threshold. In this example, the preset voltage difference threshold used by the controller to switch the single-interface charging mode and the multi-interface charging mode is flexibly adjusted, so as to ensure the accuracy with which the charging of the charger 100 is managed and controlled.

In an alternative implementation, as described above, the charger 100 of the battery pack 200 for the power tool has the multiple charging interfaces 120, and each charging interface 120 may be electrically connected to one battery pack 200 separately. The charger 100 further includes the drive assembly 140 for supplying power to each charging interface 120 and the controller 150 for controlling the electric energy transfer and the information interaction in the charger 100. The drive assembly 140 includes the multiple power modules 141 connected in parallel, and the multiple power modules 141 connected in parallel can cooperatively charge the battery packs 200 electrically connected to the preceding multiple charging interfaces 120. In addition, each charging interface 121 is electrically connected to the drive assembly 140 through the corresponding electronic switch 170. The controller 150 can acquire the battery pack connection status of each of the multiple charging interfaces 120 and control, based on the battery pack connection status of each of the multiple charging interfaces 120, the preceding electronic switch 170 corresponding to each charging interface 120, so as to control the charger 100 to enter the single-interface charging mode or the multi-interface charging mode. In addition, in the case where the charger 100 enters the single-interface charging mode, the controller 150 controls the maximum output power of the drive assembly 140 based on the maximum charging current allowed by the battery pack 200 connected to the charging interface 120 which is turned on through the turned-on electronic switch 170.

Exemplarily, the controller 150 of the charger 100 may acquire the battery pack connection status of each of the multiple charging interfaces 120 and turn, based on the battery pack connection status of each of the multiple charging interfaces 120, on or off the electronic switches 170 connected between the charging interfaces 120 and the drive assembly 140. The charger 100 has the single-interface charging mode and the multi-interface charging mode. In the single-interface charging mode, the controller 150 turns on only one electronic switch 170, and only the charging interface 120 corresponding to the electronic switch 170 and the battery pack 200 at the charging interface 120 obtain a supply current from the drive assembly 140. In the multi-interface charging mode, the controller 150 turns on the multiple electronic switches 170, the multiple charging interfaces 120 corresponding to the multiple electronic switches 170 can obtain supply currents from the drive assembly 140, and the multiple battery packs 200 at the interfaces can be charged simultaneously. In the case where the controller 150 determines that the charger 100 enters the single-interface charging mode and controls the charger 100 to enter the single-interface charging mode, the controller 150 adjusts and controls, based on the maximum charging current of the battery pack 200 at the charging interface 120 corresponding to the only one electronic switch 170 that is currently turned on, the maximum output power provided by the drive assembly 140 for the charging interface 120.

In some examples, in the case where the charger 100 has entered the single-interface charging mode, the controller 150 can control the drive assembly 140 to provide a charging rate of greater than or equal to 5 C for the charging interface 120 when the charging interface 120 is electrically connected to a tabless battery pack. When the charging interface 120 is electrically connected to a tabbed battery pack, the drive assembly 140 is controlled to provide a charging rate of less than or equal to 2 C for the charging interface 120. The tabless battery pack and the tabbed battery pack mentioned above are relative concepts. The tabbed battery pack may include a relatively traditional battery pack with a single tab, a battery pack with two tabs, or the like. The tabless battery pack may include a "full-tab" battery pack with a large number of small tabs that are connected in parallel and led out from an edge of a pole piece and a "tab-free" battery pack using a directly led-out edge of a current collector as a tab. The type information of the tabless battery pack or the tabbed battery pack mentioned above may be transmitted to the controller 150 of the charger 100 in a communication manner or the like. Thus, in the single-interface charging mode, the controller 150 may correspondingly adjust and control, based on the information, the charging rate provided by the drive assembly 140 for the corresponding charging interface 120. That is, the controller 150 may correspondingly adjust and control the power of the interface to adapt the power of the interface to the actual charging and discharging capabilities of the (tabless/tabbed) battery pack 200, thereby improving the efficiency and the effect with which the charger 100 charges the battery pack 200.

In some examples, the controller 150 acquires the voltages of the battery packs 200 electrically connected to the charging interfaces 120, respectively. In addition, in the case where the voltage difference between the battery packs 200 connected to the multiple charging interfaces 120 is greater than the preset voltage difference threshold, the controller 150 turns off the electronic switch 170 corresponding to the charging interface 120 where the battery pack 200 on the high-voltage side is located and enters the single-interface charging mode. That is, in the case where the voltage difference between the battery packs 200 connected to the multiple charging interfaces 120 exceeds the threshold, the controller 150 may turn on only the electronic switch 170 corresponding to the charging interface 120 where the battery pack 200 with the lowest voltage is located and then control the charger 100 to enter the single-interface charging mode. In some examples, in the preceding case, the controller 150 sequentially turns on more corresponding electronic switches 170 according to in ascending order of the voltages of the battery packs. Exemplarily, in the ascending order of the voltages of the battery packs, after a previous battery pack 200 is charged to a current voltage that is approximately equal to the voltage of a subsequent battery pack 200, the electronic switch 170 corresponding to the charging interface 120 where the subsequent battery pack 200 is located is additionally turned on, and so on.

In some examples, the controller 150 acquires the voltages of the battery packs 200 electrically connected to the charging interfaces 120, respectively. Then, in the case where the voltage difference between the battery packs 200 connected to the multiple charging interfaces 120 is less than or equal to the preset voltage difference threshold, the controller 150 may turn on the multiple electronic switches 170 corresponding to the charging interfaces 120 where the multiple battery packs 200 with the voltage difference less than or equal to the threshold are located and then control the charger 100 to enter the multi-interface charging mode. Exemplarily, in the multi-interface charging mode, the charger 100 or the drive assembly 140 simultaneously charges the multiple battery packs 200 with similar current voltages under the control of the controller 150. Optionally, the difference between the highest voltage and the lowest voltage among the current voltages of the multiple battery packs 200 does not exceed the preset voltage difference threshold. In some examples, in the multi-interface charging mode, the multiple charging interfaces 120 adaptively allocate the output power of the charger 100 or the drive assembly 140. For example, if the battery packs 200 electrically connected to the charging interfaces 120 are the same battery packs, ideally, the charger 100 or the drive assembly 140 performs charging with equal power through the multiple charging interfaces 120 at which the multiple battery packs 200 are located. If the battery packs 200 electrically connected to the charging interfaces 120 have similar voltages but unequal capacities, the adaptive allocation of the output power of the charging interfaces 120 may be substantially inversely proportional to the internal resistances of the battery packs.

In an alternative implementation of the present application, as described above, the charger 100 of the preceding battery pack 200 for the power tool includes at least the housing 110, the charging interface 120 for coupling and charging the first battery pack 200, the direct current power interface 131 for coupling and supplying power to the second battery pack 400, and the drive assembly 140 that transfers electric energy between the interfaces. The housing 110 of the charger 100 is the same as the housing of a second charger which has been on sale before December 31, 2024, and the maximum output power of the charger 100 is at least 1.5 times the maximum output power of the second charger. The charger 100 may be an updated iterative product of the second charger and has the same appearance structure as the second charger to maintain continuity and adaptability in the system constituted by the power tool 300, the battery pack 200, the charger 100, and the second charger. In addition, compared with the second charger, the charger 100 has the maximum output power increased by at least 50%. Thus, performance optimization is also considered while product continuity in the system is maintained. In an example, the maximum output power of the charging interface 120 of the charger 100 can be up to 2500 W while the maximum output power of the second charger which has been on sale before December 31, 2024 is only 1400 W.

In some examples, the second charger has a second interface for coupling and charging the battery pack 200. The second interface corresponds to the charging interface 120 of the charger 100 and may have the same appearance structure as the charging interface 120 of the charger 100. The maximum output power of the charging interface 120 of the charger 100 may be 3 times the maximum output power of the second interface of the second charger. In an example, the maximum output power of the charging interface 120 of the charger 100 can be up to 2500 W while the maximum output power of the second interface of the second charger which has been on sale before December 31, 2024 is only 700 W. In some examples, the charging speed at which the battery pack 200 is charged through the charging interface 120 of the charger 100 is at least 3 times the charging speed at which the battery pack 200 is charged through the second interface of the second charger, and the charging duration is significantly reduced.

In some examples, as shown in FIGS. 3 to 7, in the charger 100, the drive assembly 140 includes the drive box 142 located below the charging interface 120 and/or the direct current power interface 131 and/or the alternating current power interface 132. The drive box 142 is substantially in the shape of a rectangular cuboid and accommodates the circuit board 1421 provided with at least two power modules 141 that can be connected in parallel or further provided with the controller 150 and related electronic circuits. Electronic cables are further connected between the drive box 142 and the preceding interfaces 120 and 130. The electronic cables connected to the drive box 142 are essentially connected to the power modules 141 or the controller 150 in the box. In some examples, two parallel circuit boards 1421 are arranged in the drive box 142. An upper board is the control board where the controller 150 is located, and a lower board is the mainboard where the power modules 141 are located. The power modules 141 may be partitioned on the lower board. Electronic circuits for electric energy transfer and information transmission are also connected between the upper board and the lower board and may be routed at the edges of the boards. With this arrangement, the drive assembly 140 has a compact structure, and the modules are divided clearly. For another structural solution of the drive assembly 140 or the drive box 142, reference may be made to FIGS. 8 to 10 and the preceding related description.

In some examples, the drive assembly 140 further includes the heat sink 144. The heat sink 144 may be disposed on the one or more side surfaces of the drive box 142. For example, the heat sink 144 may be disposed on the bottom surface of the drive box 142 and located between the drive box 142 and the housing 110 of the charger 100. The multiple parallel fins of the heat sink 144 are arranged at intervals to effectively conduct the heat from the drive box 142 outward. In some examples, the thickness (the thickness of the fin base and/or the fins) of the heat sink 144 of the charger 100 is at least 2 times the thickness of a second heat sink of the second charger which has been on sale before December 31, 2024. In some examples, the base thickness of the heat sink 144 is greater than or equal to 3 mm, and the fin thickness of the heat sink 144 is greater than or equal to 15 mm.

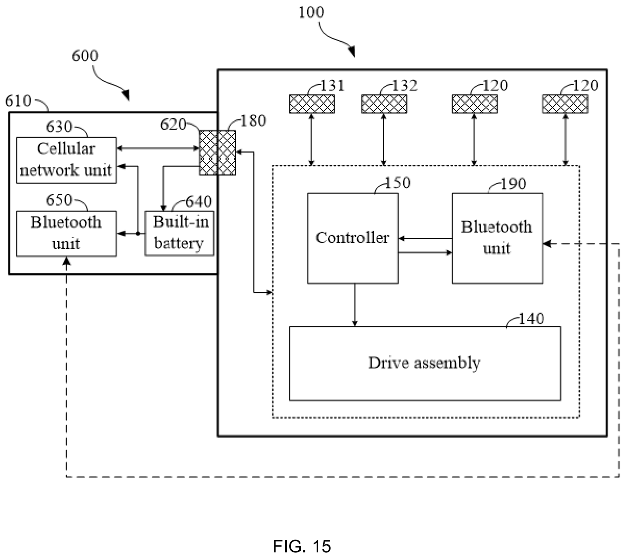

Referring to FIGS. 3 and 15, the present application further provides a charging system including the charger 100 and a wireless communication module 600. As described above, the charger 100 in the charging system includes the housing 110 and the charging interface 120 on the housing 110, where the charging interface 120 is used for detachably coupling and charging the (first) battery pack 200. The charger 100 also includes the alternating current power interface 132 for acquiring the mains electricity, the direct current power interface 131 for acquiring the direct current, and the drive assembly 140. The drive assembly 140 is accommodated in the housing 110 and charges, with the current acquired from the alternating current power interface 132 or the direct current power interface 131, the battery pack 200 connected to the charging interface 120. The charger 100 further includes the controller 150 that is accommodated in the housing 110 and manages and controls the electric energy transfer and information interaction of the charger 100. The controller 150 can acquire the information on the battery pack 200 connected to the charging interface 120. In addition, in this implementation, the charger 100 further includes a wireless communication module interface 180 that is disposed on the housing 110 and is detachably connectable to the preceding wireless communication module 600 in the charging system.

The wireless communication module 600 in the charging system includes a module housing 610, a host interface 620 disposed on the module housing 610, and a cellular network unit 630 and a built-in battery 640 accommodated in the module housing 610. The module housing 610 forms an appearance body of the wireless communication module 600, and an accommodation space is formed inside the module housing 610. The host interface 620 is disposed on the module housing 610. The host interface 620 can be coupled to the wireless communication module interface 180 disposed on the housing 110 of the preceding charger 100, so as to implement an interface-based electrical connection between the wireless communication module 600 and the charger 100 in a wired manner. The cellular network unit 630 and the built-in battery 640 are a functional unit of the wireless communication module 600 and a power supply unit of the wireless communication module 600, respectively. The cellular network unit 630 is connectable to an Internet server, and the built-in battery 640 can at least supply power to the cellular network unit 630. In this implementation, the wireless communication module 600 in the charging system may be regarded as a plug-in module of the charger 100. The wireless communication module 600 can be mounted to the charger 100 in an interface-coupling manner or can be detached from the charger 100 and exist. The charger 100 uses the wireless communication module 600 to upload data. The information on the charger 100 and/or the information on the battery pack 200 connected to the charging interface 120 of the charger 100 are uploaded to the Internet server through the cellular network unit 630 of the wireless communication module 600 for collating and analyzing related data. In addition, in the case where the host interface 620 of the wireless communication module 600 is coupled to the wireless communication module interface 180 of the charger 100 in the charging system, the drive assembly 140 of the charger 100 may charge the built-in battery 640 of the wireless communication module 600 with the current acquired from the alternating current power interface 132 or the current acquired from the direct current power interface 131. In other words, the charger 100 in the charging system may charge the built-in battery 640 of the wireless communication module 600 with the alternating current or the direct current so that a task of the charger 100 is processed more flexibly and efficiently. The built-in battery 640 can ensure that the wireless communication module 600 continues to operate after the wireless communication module 600 is separated from the charger 100. For example, in the housing 110 of the charger 100, the drive assembly 140 or the circuit board 1421 where the drive assembly 140 is located may be led out and connected to the preceding wireless communication module interface 180 through an electronic cable, so as to implement the connection of the electric energy transfer line between the charger 100 and the wireless communication module 600 or further implement the connection of a wired communication link between the charger 100 and the wireless communication module 600.

In some examples, the drive assembly 140 of the charger 100 supplies electric energy to the built-in battery 640 of the wireless communication module 600 in manners with corresponding priorities. Optionally, the drive assembly 140 preferentially uses the current acquired from the alternating current power interface 132 to charge the built-in battery 640, that is, the module is preferentially charged in the alternating current manner. When the charger 100 receives both the mains electricity through the alternating current power interface 132 and the direct current of the second battery pack 400 and the like through the direct current power interface 131, the drive assembly 140 may perform alternating current-direct current conversion, buck-boost conversion, rectification, filtering, and the like on the mains electricity received from the power grid through the alternating current power interface 132 instead of using the electric energy stored by the second battery pack 400. Then, the drive assembly 140 transfers the processed mains electricity to the built-in battery 640 through the coupling between the wireless communication module interface 180 and the host interface 620. In some examples, the direct current power interface 131 is detachably connected to the second battery pack 400 providing a direct current, and the total capacity of the second battery pack 400 is greater than or equal to 2 kWh. The electric energy stored in the second battery pack 400 may be transferred to the (first) battery pack 200 connected to the charging interface 120. Optionally, the electric energy stored in the second battery pack 400 may be supplied to the built-in battery 640 of the wireless communication module 600 in the case where no alternating current is received.

In some examples, the preceding wireless communication module interface 180 disposed on the housing 110 of the charger 100 is a USB interface. Exemplarily, types of the wireless communication module interface 180 include, but are not limited to, a USB Type-C interface, a USB Type-A interface, and the like, and application protocols of the wireless communication module interface 180 include, but are not limited to, USB 4.0, USB 3.2, USB 3.0, and the like. In some examples, the preceding wireless communication module interface 180 also supports fast charging. In some examples, the preceding wireless communication module interface 180 is disposed on a side surface of the housing 110 of the charger 100. Exemplarily, the position of the wireless communication module interface 180 includes, but is not limited to, one or more sidewalls of the housing 110 of the charger 100 other than the bottom surface. For example, assuming that the charging interface 120 and the direct current power interface 131 of the charger 100 connected to the (first) battery pack 200 and the second battery pack 400 may be disposed in the front and rear direction, the preceding wireless communication module interface 180 may be disposed on the left side surface and/or the right side surface of the housing 110 of the charger 100. In some examples, the wireless communication module 600 may be provided with a snap, a magnetic attraction member, or another connection device that mates with the housing 100 of the charger 100 so that the wireless communication module 600 is firmly mounted on the sidewall of the charger 100.

In some examples, the preceding wireless communication module interface 180 is further provided with a detachably connected protective plug. When the wireless communication module interface 180 is not coupled to the host interface 620, the protective plug may be mounted and connected to the wireless communication module interface 180 so that the wireless communication module interface 180 is relatively isolated from an external space, thereby achieving dustproof and waterproof effects. When the wireless communication module interface 180 is coupled to the host interface 620, the protective plug can be detached from the wireless communication module interface 180 without hindering the preceding two interfaces from being coupled and connected to each other. Exemplarily, the preceding protective plug is a rubber plug which can mate with the wireless communication module interface 180, or the protective plug is a movable baffle. In some examples, the charger 100 is further provided with a slot or the like capable of accommodating the detached protective plug, and/or the protective plug such as the rubber plug can be detachably connected to the wireless communication module interface 180 in a manner of not completely separating from the charger 100. For example, in addition to the body for filling the interface, the protective plug also has a connection portion which is always connected to the charger 100 and is also connected to the body, such as a connection wire. In some examples, the host interface 620 on the module housing of the wireless communication module 600 may also be provided with a protective plug. For a specific implementation, reference may be made to the protective plug on the preceding wireless communication module interface 180, and the details are not repeated.

In some examples, a Bluetooth unit is built in each of the charger 100 and the wireless communication module 600 mentioned above. A wireless communication connection may be established between the charger 100 and the wireless communication module 600 through respective Bluetooth units for transmitting data such as information on a battery pack. In some examples, the information on a battery pack transmitted between the charger 100 and the wireless communication module 600 includes one or more of the voltage, current, electric quantity, and other information of the charging process currently performed by the battery pack 200 connected to the charging interface 120. Exemplarily, the preceding information may include one or more of the rated (nominal) voltage, rated (nominal) capacity, maximum charging current, and maximum charging rate of the battery pack 200 and the current actual voltage, (charging) current, electric quantity, and the like of the battery pack 200. Optionally, the information on a battery pack may further include the number of cycles, temperature, model, expected waiting duration for full charging, and the like of the battery pack 200.

In an alternative implementation of the present application, as described above, the charging system includes the charger 100 and the wireless communications module 600. The charger 100 in the charging system includes the housing 110, the charging interface 120 for detachably coupling and charging the battery pack, and the wireless communication module interface 180 for detachably connecting the wireless communication module 600 in the charging system, where the charging interface 120 is disposed on the housing 110. The charger 100 further includes the drive assembly 140, the controller 150, and the Bluetooth unit 650 that are accommodated in the housing 110. The drive assembly 140 can at least charge the battery pack 200 connected to the charging interface 120. The controller 150 may manage and control the electric energy transfer and information interaction of the charger 100 and can acquire the information on the battery pack 200 connected to the charging interface 120. The Bluetooth unit 650 has a communication connection relationship with the controller 150 and can receive and forward the information on the battery pack 200 acquired by the controller 150 and/or the information on the charger 100. The wireless communication module 600 in the charging system includes the module housing 610, the host interface 620 that is disposed on the module housing 610 and can be coupled to the preceding wireless communication module interface 180, and the Bluetooth unit 650 and the cellular network unit 630 that are accommodated in the module housing 610, which are functional units in the wireless communication module 600. The cellular network unit 630 is connectable to the Internet server, and the Bluetooth unit 650 may be wirelessly connected to the Bluetooth unit 190 in the charger 100. To clearly describe the relevant solutions, the Bluetooth unit 190 in the charger 100 is recorded as the first Bluetooth unit 190, and the Bluetooth unit 650 in the wireless communication module 600 is recorded as the second Bluetooth unit 650 below. When the host interface 620 of the wireless communication module 600 is coupled to the wireless communication module interface 180 of the charger 100 in the charging system, the wireless communication module 600 establishes a wired communication connection with the controller 150 of the charger 100 at least through the preceding wireless communication module interface 180. In the case where the host interface 620 is not coupled to the wireless communication interface, the controller 150 establishes the wireless communication connection with the wireless communication module 600 through the first Bluetooth unit 190. In other words, the charger 100 in the charging system may implement the communication connection with the wireless communication module 600 in a wired or wireless manner so that the data of the charger 100 and the data of the battery pack thereon are uploaded more flexibly and efficiently.

Exemplarily, the controller 150 of the charger 100 acquires the information on the charger 100 and the information on the battery pack 200 connected to the charging interface 120. In the case where the wireless communication module interface 180 of the charger 100 is coupled to the host interface 620 of the wireless communication module 600, that is, the wireless communication module 600 is mounted to the charger 100, the controller 150 may be communicatively connected to the wireless communication module 600 in the wired manner through a coupling interface, transmit the preceding acquired information to the wireless communication module 600 through the wired communication link, and then transmit the acquired information to the Internet server through the cellular network unit 630 in the wireless communication module 600. In the case where the wireless communication module 600 is not coupled to the host interface 620, that is, the wireless communication module 600 is separated from the charger 100, the controller 150 may establish the communication connection with the second Bluetooth unit 650 in the wireless communication module 600 in the wireless manner through the first Bluetooth unit 190, transmit the preceding acquired information to the wireless communication module 600 through the wired communication link, and then transmit the acquired information to the Internet server through the cellular network unit 630 in the wireless communication module 600. The wired communication connection implemented between the charger 100 and the wireless communication module 600 through interface coupling conforms to a physical layer serial port protocol and/or an application layer serial port protocol, including but not limited to a universal asynchronous receiver-transmitter (UART), RS-485, Modbus, and a controller area network (CAN). The wireless communication connection between the first Bluetooth unit 190 and the second Bluetooth unit 650 conforms to a classic Bluetooth protocol stack, a Bluetooth low energy protocol stack, and the like. The wireless communication connection between the cellular network unit 630 and the Internet server may involve various protocols (protocol families/protocol stacks) such as the Transmission Control Protocol (TCP), the Internet Protocol (IP), a wireless fidelity (Wi-Fi) protocol, the Multiple-Input and Multiple-Output (MIMO) protocol, the Fourth Generation (4G) protocol, and the Fifth Generation (5G) protocol, which are related to actual networking and are not specifically limited herein.

In some examples, in addition to establishing, in the case where the wireless communication module interface 180 is not coupled to the host interface 620, the wireless communication connection with the second Bluetooth unit 650 to transmit the information on the charger 100 and/or the information on the battery pack 200, the first Bluetooth unit 190 of the charger 100 may also establish a wireless communication connection with a target electronic device when the target electronic device appears within a communication range, so as to transmit the preceding information through another communication link. For example, the user may install a corresponding application on a user equipment such as a mobile phone or a tablet computer and run the application so that the first Bluetooth unit 190 may establish a wireless communication connection with a Bluetooth unit on the user equipment to transmit the preceding information to the user equipment. The application may also invoke a cellular network unit of the user equipment to continue to upload the preceding information to the Internet server. The wireless communication link described in this example may be used as an alternative or redundant link for the preceding implementation.

After the information on the battery pack 200 and/or the information on the charger 100 is uploaded by the cellular network unit to the Internet server, that is, the data is loaded to the cloud, the Internet server or another related processing device may aggregate, collate, and analyze the information on the battery pack 200 and/or the information on the charger 100. In addition, the user may use the mobile phone or another user equipment to run the preceding application and interact with the Internet server so as to consult the preceding data and information and related collation and analysis results.

In some examples, the first Bluetooth unit 190 and the second Bluetooth unit 650 may also establish the wireless communication connection in the case where the wireless communication module interface 180 is coupled to the host interface 620. In some examples, redundant data transmission is performed between the first Bluetooth unit 190 and the second Bluetooth unit 650 mentioned above to ensure that the information on the charger 100 and/or the information on the battery pack 200 mentioned above is not lost or can be checked or recovered. In some other examples, the first Bluetooth unit 190 and the second Bluetooth unit 650 mentioned above may perform wireless communication in the case where the wired communication link between the wireless communication module interface 180 and the host interface 620 is detected to fail.

In some examples, the information on a battery pack transmitted between the charger 100 and the wireless communication module 600 includes one or more of the voltage, current, electric quantity, and other information of the charging process currently performed by the battery pack connected to the charging interface. Exemplarily, the preceding information may include one or more of the rated (nominal) voltage, rated (nominal) capacity, maximum charging current, and maximum charging rate of the battery pack 200 and the current actual voltage, (charging) current, electric quantity, and the like of the battery pack 200. Optionally, the information on a battery pack may further include the number of cycles, temperature, model, expected waiting duration for full charging, and the like of the battery pack 200. In some examples, the information transmitted between the charger 100 and the wireless communication module 600 further includes information of the charging process currently performed by the charger 100, including but not limited to one or more of the maximum output power, maximum output current, total output power, total output current, current actual temperature of the charger 100 and the power and/or current allocated to the battery pack 200 connected to each charging interface 120. In some examples, the charger 100 and the wireless communication module 600 may perform real-time data transmission and periodically transmit relevant historical data in a previous period.

It is to be noted that under the premise that the features are not contradictory, the various implementations described above and the multiple examples of each of the various implementations may be cross-combined with each other to comprehensively optimize the charger and charging system in the present application, and these solutions should still fall within the scope of the present application.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A charger, comprising:
a housing;
a charging interface configured to be electrically connected to a first battery pack;
a direct current power interface configured to be electrically connected to a second battery pack; and
a drive assembly accommodated in the housing and configured to supply power to the charging interface;
wherein the drive assembly is electrically connected to the charging interface and the direct current power interface and is configured to transfer electric energy from the second battery pack to the first battery pack, wherein a maximum output power of the drive assembly is greater than or equal to 2000 W, and the first battery pack and the second battery pack are detachably connected to the charger, so as to be detached and mounted to a power tool and supply power to the power tool.

2. The charger according to claim 1, wherein the first battery pack supplies power to a handheld power tool, and the second battery pack supplies power to a wheeled power tool.

3. The charger according to claim 1, wherein a total capacity of the first battery pack is less than or equal to 1 kWh, and a total capacity of the second battery pack is greater than or equal to 2 kWh.

4. The charger according to claim 1, wherein a rated voltage of the first battery pack is substantially the same as a rated voltage of the second battery pack.

5. The charger according to claim 1, wherein electrochemical properties of cells in the first battery pack are different from electrochemical properties of cells in the second battery pack.

6. The charger according to claim 1, further comprising an alternating current power interface, wherein the alternating current power interface is configured to charge the first battery pack and the second battery pack.

7. The charger according to claim 6, further comprising an alternating current-direct current converter, wherein the alternating current power interface charges the second battery pack through the alternating current-direct current converter.

8. The charger according to claim 1, wherein the drive assembly comprises a drive box and at least one power module accommodated in the drive box, and the at least one power module is electrically connected to the charging interface and the direct current power interface.

9. The charger according to claim 8, wherein the at least one power module comprises a four-switch buck-boost (FSBB) circuit, and switch transistors connected in parallel are used in the FSBB circuit.

10. The charger according to claim 9, wherein the at least one power module further comprises a drive booster circuit configured to send a strengthened drive signal to the FSBB circuit; and the drive booster circuit comprises at least one of a driver chip, a push-pull circuit, a totem pole circuit, and a level shifter circuit.

11. The charger according to claim 8, comprising a plurality of charging interfaces, wherein at least two power modules are capable of being connected in parallel and supplying power to a same charging interface.

12. The charger according to claim 8, wherein a ratio of the maximum output power of the drive assembly to a volume of the drive box is greater than or equal to 0.7 W/cm³.

13. The charger according to claim 12, wherein the drive box is substantially in a shape of a rectangular cuboid and is located below the charging interface and/or the direct current power interface, and the volume of the drive box is less than or equal to 3500 cm³.

14. The charger according to claim 1, wherein the drive assembly comprises a drive box and a fan accommodated in the drive box, and a volume of the fan is less than or equal to 100 cm³.

15. The charger according to claim 1, further comprising a controller, wherein the controller is electrically connected to the drive assembly and a plurality of charging interfaces, and the controller confirms a battery pack connection status of each charging interface among the plurality of charging interfaces and controls, based on the battery pack connection status, a maximum output power allocated by the drive assembly to each charging interface.

## Amended claims

### Amended claims in accordance with Rule 137(2) EPC.

1. A charger (100), comprising:
a housing (110);
a charging interface (120) configured to be electrically connected to a first battery pack (200);
a direct current power interface (131) configured to be electrically connected to a second battery pack (400); and
a drive assembly (140) accommodated in the housing and configured to supply power to the charging interface;
wherein the drive assembly is electrically connected to the charging interface and the direct current power interface, and the first battery pack and the second battery pack are detachably connected to the charger, so as to be detached and mounted to a power tool (300) and supply power to the power tool;
wherein the drive assembly is configured to transfer electric energy from the second battery pack to the first battery pack, and has a maximum output power greater than or equal to 2000 W.

2. The charger according to claim 1, wherein the second battery pack has a total capacity of greater than or equal to 2 kWh.

3. The charger according to claim 2, wherein a total capacity of the first battery pack is less than or equal to 1 kWh.

4. The charger according to claim 3, wherein the first battery pack has the total capacity of less than or equal to 1 kWh for being charged by the charger, and the second battery pack has the total capacity of greater than or equal to 2 kWh for supplying electric energy to the drive assembly.

5. The charger according to claim 1, wherein a rated voltage of the first battery pack is substantially the same as a rated voltage of the second battery pack.

6. The charger according to claim 1, wherein electrochemical properties of cells in the first battery pack are different from electrochemical properties of cells in the second battery pack.

7. The charger according to claim 1, further comprising an alternating current power interface (132), wherein the alternating current power interface is configured to charge the first battery pack and the second battery pack.

8. The charger according to claim 7, further comprising an alternating current-direct current converter, wherein the alternating current power interface charges the second battery pack through the alternating current-direct current converter.

9. The charger according to claim 1, wherein the drive assembly comprises a drive box and at least one power module accommodated in the drive box, and the at least one power module is electrically connected to the charging interface and the direct current power interface.

10. The charger according to claim 9, wherein the at least one power module comprises a four-switch buck-boost (FSBB) circuit, and switch transistors connected in parallel are used in the FSBB circuit.

11. The charger according to claim 10, wherein the at least one power module further comprises a drive booster circuit configured to send a strengthened drive signal to the FSBB circuit; and the drive booster circuit comprises at least one of a driver chip, a push-pull circuit, a totem pole circuit, and a level shifter circuit.

12. The charger according to claim 9, comprising a plurality of charging interfaces, wherein at least two power modules are capable of being connected in parallel and supplying power to a same charging interface.

13. The charger according to claim 9, wherein the at least one power module comprises an energy storage element having a height of less than or equal to 25 mm, and wherein a ratio of the maximum output power of the drive assembly to a volume of the drive box is greater than or equal to 0.7 W/cm³.

14. The charger according to claim 13, wherein the drive box is substantially in a shape of a rectangular cuboid and is located below the charging interface and/or the direct current power interface, and the volume of the drive box is less than or equal to 3500 cm³.

15. The charger according to claim 1, wherein the drive assembly comprises a drive box and a fan accommodated in the drive box, and a volume of the fan is less than or equal to 100 cm³.

16. The charger according to claim 1, further comprising a controller (150), wherein the controller is electrically connected to the drive assembly and a plurality of charging interfaces (120), and the controller confirms a battery pack connection status of each charging interface among the plurality of charging interfaces and controls, based on the battery pack connection status, a maximum output power allocated by the drive assembly to each charging interface.
